# EUROPEAN PATENT APPLICATION

(11) **EP 4 277 145 A1**
(43) Date of publication of application: **15.11.2023**
(21) Application number: 23171413.0
(22) Date of filing: 03.05.2023
(51) Int. Cl.: H04B 7/04

(54) **USER EQUIPMENT MOBILITY FOR COMMUNICATION USING REFLECTIVE SURFACES**

(30) Priority: 11.05.2022 US 202263340737 P; 20.03.2023 US 202318186871
(71) Applicant: Apple Inc., Cupertino CA 95014 (US)
(72) Inventor: ELLENBECK, Jan, Gruenwald (DE); MEYER, Stefan, Hoechstadt (DE); GUNZELMANN, Bertram, Koenigsbrunn (DE)
(74) Representative: Froud, Christopher Andrew

(57) **Abstract**

A user equipment UE device (10) may communicate with an access point AP (6) at greater than 100 GHz via a reconfigurable intelligent surface RIS (96). The UE (10) may select tracking beams based on sensor data. The UE (10) may instruct the RIS (96) to sweep over the tracking beams while the UE (10) gathers performance metric data. The UE (10) may identify a serving beam (154) based on the performance metric data. The UE (10) may control the RIS (96) to form the serving beam (154) to reflect wireless data between the AP (6) and the UE (10). Using the UE (10) to intelligently select tracking beams based on sensor data may greatly reduce the amount of time required to track the UE device (10) as it moves relative to sweeping over all formable signal beams, thereby reducing latency and minimizing disruptions in wireless data transfer between the UE device (10) and the AP (6).

## Description

This application claims priority to U.S. patent application No. 18/186,871, filed March 20, 2023, and U.S. provisional patent application No. 63/340,737, filed May 11, 2022.

### Field

This disclosure relates generally to electronic devices and, more particularly, to electronic devices with wireless circuitry.

### Background

Electronic devices are often provided with wireless capabilities. An electronic device with wireless capabilities has wireless circuitry that includes one or more antennas. The wireless circuitry is used to perform communications using radio-frequency signals conveyed by the antennas.

As software applications on electronic devices become more data-intensive over time, demand has grown for electronic devices that support wireless communications at higher data rates. However, the maximum data rate supported by electronic devices is limited by the frequency of the radio-frequency signals. As the frequency of the radio-frequency signals increases, it can become increasingly difficult to perform satisfactory wireless communications because the signals become subject to significant over-the-air attenuation and typically require line-of-sight.

### Summary

A user equipment (UE) device may communicate with a wireless access point (AP) using wireless signals transmitted using a data transfer radio access technology (RAT) at frequencies greater than about 100 GHz. When a line-of-sight path between the UE device and the AP is blocked, a reconfigurable intelligent surface (RIS) may be used to reflect the wireless signals between the UE device and the AP. The RIS may also be used to reflect the wireless signals when reflection via the RIS exhibits superior propagation conditions than the line-of-sight path.

The RIS may be a two-dimensional surface of engineered material having reconfigurable properties for performing communications. The RIS may include an array of discrete antenna elements, where an impinging electro-magnetic (EM) wave is re-radiated with a respective phase and amplitude response. A controller at the RIS may determine the response on a per-element or per-group-of-elements basis. The scattering, absorption, reflection, and diffraction properties of the entire RIS can therefore be changed over time and controlled (e.g., by software running on the RIS or other devices communicably coupled to the RIS).

One way of achieving the per-element phase and amplitude response of the antenna elements is by adjusting the impedance of the antenna elements, thereby controlling the complex reflection coefficient that determines the change in amplitude and phase of the re-radiated signal. Control circuitry may adjust the impedances across the array to form different RIS signal beams from a set of RIS signal beams. The different RIS signal beams may be identified by a codebook of the RIS. The RIS may include other circuitry for communicating with the AP and/or the UE device using a control RAT. Hardware for transmitting or receiving wireless data using the data transfer RAT and the array of antenna elements may be omitted from the RIS to minimize cost and power.

The UE device may include a sensor that generates sensor data. The sensor data may be indicative of the orientation/location of the UE device relative to the RIS, the position of the UE device, and/or motion of the UE device. Upon expiration of a periodic tracking sweep timer or on-demand, the UE device may generate a set of tracking beams. The set of tracking beams may include a subset of the RIS signal beams formable by the RIS, a subset of AP signal beams formable by the AP, and/or a subset of UE signal beams formable by the UE device. The UE device may populate the set of tracking beams based on the sensor data. The set of tracking beams may include RIS signal beams that are likely to overlap the UE device based on the sensed position and/or motion of the UE device and/or based on past signal beam and location history of the UE device. If desired, the UE device may assign confidence levels to the signal beams and may select the set of tracking beams based on the confidence levels.

The UE device (or the AP) may use the control RAT to instruct the RIS to sweep over the RIS beams in the set of tracking beams and/or to instruct the AP to sweep over the AP beams in the set of tracking beams. The UE device may also control its antenna array to sweep over UE beams in the set of tracking beams. The UE may receive reference signals transmitted by the AP during the sweep. The UE may gather wireless performance metric data from the reference signals. The UE may identify serving beam(s) from the set of tracking beams based on the wireless performance metric data. The UE may control the AP, RIS, and/or its own antenna array to form the serving beam(s) and the serving beam(s) may be used to convey wireless data between the AP and the UE device via reflection by the RIS. This may greatly reduce the amount of time required to track the UE device as it moves relative to sweeping over all formable signal beams, thereby reducing latency and minimizing disruptions in wireless data transfer between the UE device and the AP.

An aspect of the disclosure provides a method of operating a user equipment (UE) device to communicate with a wireless access point via a reconfigurable intelligent surface (RIS), the RIS having a first array of antenna elements, the RIS having a set of signal beams formable by the first array of antenna elements, the UE device including a second array of antenna elements. The method can include generating sensor data at a sensor. The method can include transmitting, using a transmitter, an instruction to the RIS that configures the RIS to sweep the first array of antenna elements over a tracking beam set that is selected based on the sensor data, the tracking beam set including a subset of the signal beams in the set of signal beams formable by the first array of antenna elements. The method can include receiving, using the second array of antenna elements, radio-frequency signals that have reflected off the RIS while the RIS sweeps the first array of antenna elements over the tracking beam set. The method can include generating, at one or more processors, wireless performance metric data based on the radio-frequency signals received by the second array of antenna elements.

An aspect of the disclosure provides a user equipment (UE) device configured to communicate with a wireless access point via a reconfigurable intelligent surface (RIS) having a set of signal beams formable by antenna elements on the RIS. The UE device may include an antenna array configured to receive radio-frequency signals transmitted by the wireless access point and reflected off the RIS. The UE device may include a sensor configured to generate sensor data. The UE device may include a transmitter configured to control the RIS to sweep over a set of tracking beams while reflecting the radio-frequency signals transmitted by the wireless access point, the set of tracking beams including one or more of the signal beams from the set of signal beams selected based on the sensor data.

An aspect of the disclosure provides a method of operating a first electronic device to communicate with a second electronic device via a reconfigurable intelligent surface (RIS), the RIS having an array of antenna elements, the array of antenna elements being programmable to form a set of signal beams. The method can include detecting, using a sensor, movement of the first electronic device. The method can include instructing, using a transmitter, the RIS to sweep over a subset of the set of signal beams while the first electronic device measures radio-frequency signals transmitted by the wireless access point, the subset of the set of signal beams being selected based on the detected movement of the first electronic device. The method can include controlling, using the transmitter, the RIS to use a serving beam to reflect wireless data conveyed between the first electronic device and the second electronic device, the serving beam being selected from the set of signal beams based on the measured radio-frequency signals.

### Brief Description of the Drawings

FIG. 1 is a schematic block diagram of an illustrative wireless access point and user equipment device that wirelessly communicate at frequencies greater than about 100 GHz in accordance with some embodiments.
FIG. 2 is a top view of an illustrative antenna that transmits wireless signals at frequencies greater than about 100 GHz based on optical local oscillator (LO) signals in accordance with some embodiments.
FIG. 3 is a top view showing how an illustrative antenna of the type shown in FIG. 2 may convert received wireless signals at frequencies greater than about 100 GHz into intermediate frequency signals based on optical LO signals in accordance with some embodiments.
FIG. 4 is a top view showing how multiple antennas of the type shown in FIGS. 2 and 3 may be stacked to cover multiple polarizations in accordance with some embodiments.
FIG. 5 is a top view showing how stacked antennas of the type shown in FIG. 4 may be integrated into a phased antenna array for conveying wireless signals at frequencies greater than about 100 GHz within a corresponding signal beam.
FIG. 6 is a circuit diagram of illustrative wireless circuitry having an antenna that transmits wireless signals at frequencies greater than about 100 GHz and that receives wireless signals at frequencies greater than about 100 GHz for conversion to intermediate frequencies and then to the optical domain in accordance with some embodiments.
FIG. 7 is a circuit diagram of an illustrative phased antenna array that conveys wireless signals at frequencies greater than about 100 GHz within a corresponding signal beam in accordance with some embodiments.
FIG. 8 is a diagram showing how an illustrative reconfigurable intelligent surface (RIS) may reflect wireless signals at frequencies greater than about 100 GHz between a wireless access point and a user equipment device in accordance with some embodiments.
FIG. 9 is a diagram showing how an illustrative RIS may include an array of antenna elements configured to passively reflect wireless signals at frequencies greater than about 100 GHz in different directions in accordance with some embodiments.
FIG. 10 is a diagram showing how an illustrative wireless access point, RIS, and user equipment device may communicate using both a data transfer radio access technology (RAT) and a control RAT in accordance with some embodiments.
FIG. 11 is a flow chart of illustrative operations that may be performed by a wireless access point and a user equipment device to establish and maintain communications at frequencies greater than about 100 GHz via a RIS in accordance with some embodiments.
FIG. 12 is a side view showing how an illustrative RIS may relay communications between a wireless access point and a user equipment device using different signal beams as the user equipment device moves in accordance with some embodiments.
FIG. 13 is a flow chart of illustrative operations involved in using a user equipment device to control a RIS and a wireless access point to track the user equipment device as it moves in accordance with some embodiments.
FIG. 14 is a flow chart of illustrative operations that may be performed by a user equipment device to establish and maintain beam coverage of the user equipment device by a RIS in accordance with some embodiments.
FIG. 15 is a flow chart of illustrative operations that may be performed by a user equipment device to generate a set of tracking beams for sweeping over to maintain beam coverage of the user equipment device in accordance with some embodiments.
FIG. 16 is a diagram showing how different sets of tracking beams may be selected around a user equipment device for sweeping over to maintain beam coverage of the user equipment device in accordance with some embodiments.
FIG. 17 is a timing diagram that shows how an illustrative user equipment device may perform data transfer and beam tracking in a time-multiplexed manner in accordance with some embodiments.

### Detailed Description

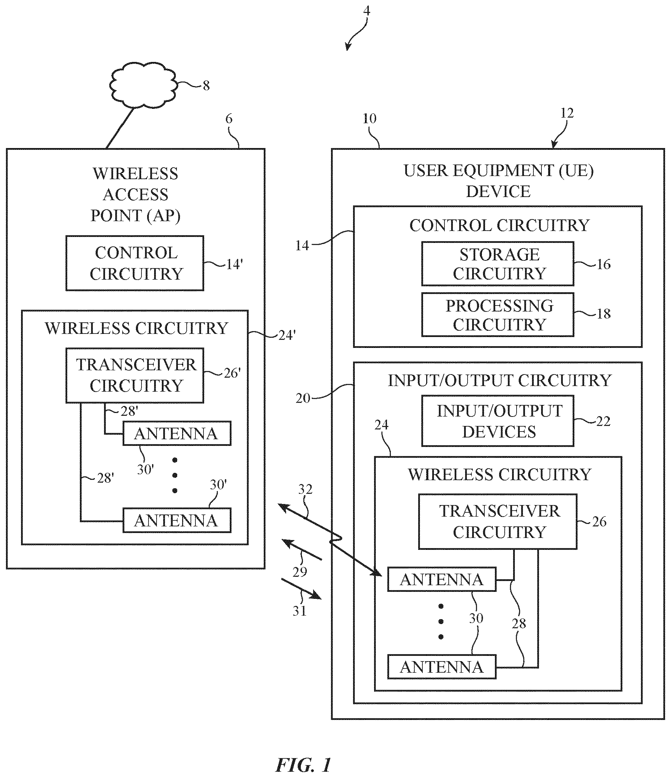

FIG. 1 is a schematic diagram of an illustrative communications system 4 (sometimes referred to herein as communications network 4) for conveying wireless data between communications terminals. Communications system 4 may include network nodes (e.g., communications terminals). The network nodes may include user equipment (UE) such as one or more UE devices 10. The network nodes may also include external communications equipment (e.g., communications equipment other than UE devices 10) such as external communications equipment 6. External communications equipment 6 may include one or more electronic devices and may be a wireless base station, wireless access point, or other wireless equipment for example. Implementations in which external communications equipment 6 is a wireless access point are described herein as an example. External communications equipment 6 may therefore sometimes be referred to herein as wireless access point 6 or simply as access point (AP) 6. UE devices 10 and AP 6 may communicate with each other using one or more wireless communications links. If desired, UE devices 10 may wirelessly communicate with AP 6 without passing communications through any other intervening network nodes in communications system 4 (e.g., UE devices 10 may communicate directly with AP 6 over-the-air).

AP 6 may be communicably coupled to a larger communications network 8 via wired and/or wireless links. The larger communications network may include one or more wired communications links (e.g., communications links formed using cabling such as ethernet cables, radio-frequency cables such as coaxial cables or other transmission lines, optical fibers or other optical cables, etc.), one or more wireless communications links (e.g., short range wireless communications links that operate over a range of inches, feet, or tens of feet, medium range wireless communications links that operate over a range of hundreds of feet, thousands of feet, miles, or tens of miles, and/or long range wireless communications links that operate over a range of hundreds or thousands of miles, etc.), communications gateways, wireless access points, base stations, switches, routers, servers, modems, repeaters, telephone lines, network cards, line cards, portals, user equipment (e.g., computing devices, mobile devices, etc.), etc. The larger communications network may include communications (network) nodes or terminals coupled together using these components or other components (e.g., some or all of a mesh network, relay network, ring network, local area network, wireless local area network, personal area network, cloud network, star network, tree network, or networks of communications nodes having other network topologies), the Internet, combinations of these, etc. UE devices 10 may send data to and/or may receive data from other nodes or terminals in the larger communications network via AP 6 (e.g., AP 6 may serve as an interface between user equipment devices 10 and the rest of the larger communications network).

User equipment (UE) device 10 of FIG. 1 is an electronic device (sometimes referred to herein as electronic device 10, device 10, or electro-optical device 10) and may be a computing device such as a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device, a device embedded in eyeglasses, goggles, or other equipment worn on a user's head, or other wearable or miniature device, a television, a computer display that does not contain an embedded computer, a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in the functional block diagram of FIG. 1, UE device 10 may include components located on or within an electronic device housing such as housing 12. Housing 12, which may sometimes be referred to as a case, may be formed of plastic, glass, ceramics, fiber composites, metal (e.g., stainless steel, aluminum, metal alloys, etc.), other suitable materials, or a combination of these materials. In some situations, part or all of housing 12 may be formed from dielectric or other low-conductivity material (e.g., glass, ceramic, plastic, sapphire, etc.). In other situations, housing 12 or at least some of the structures that make up housing 12 may be formed from metal elements.

UE device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solidstate drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more processors, microprocessors, microcontrollers, digital signal processors, host processors, baseband processor integrated circuits, application specific integrated circuits, central processing units (CPUs), graphics processing units (GPUs), etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as satellite navigation applications, internet browsing applications, voice-over-internet-protocol (VOIP) telephone call applications, email applications, media playback applications, operating system functions, etc. To support interactions with external equipment, control circuitry 14 may be used in implementing communications protocols. Communications protocols that may be implemented using control circuitry 14 include internet protocols, wireless local area network (WLAN) protocols (e.g., IEEE 802.11 protocols - sometimes referred to as Wi-Fi^{®}), protocols for other short-range wireless communications links such as the Bluetooth^{®} protocol or other wireless personal area network (WPAN) protocols, IEEE 802.11ad protocols (e.g., ultra-wideband protocols), cellular telephone protocols (e.g., 3G protocols, 4G (LTE) protocols, 3GPP Fifth Generation (5G) New Radio (NR) protocols, Sixth Generation (6G) protocols, sub-THz protocols, THz protocols, etc.), antenna diversity protocols, satellite navigation system protocols (e.g., global positioning system (GPS) protocols, global navigation satellite system (GLONASS) protocols, etc.), antenna-based spatial ranging protocols, optical communications protocols, or any other desired communications protocols. Each communications protocol may be associated with a corresponding radio access technology (RAT) that specifies the physical connection methodology used in implementing the protocol.

UE device 10 may include input-output circuitry 20. Input-output circuitry 20 may include input-output devices 22. Input-output devices 22 may be used to allow data to be supplied to UE device 10 and to allow data to be provided from UE device 10 to external devices. Input-output devices 22 may include user interface devices, data port devices, and other input-output components. For example, input-output devices 22 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), temperature sensors, etc. In some configurations, keyboards, headphones, displays, pointing devices such as trackpads, mice, and joysticks, and other input-output devices may be coupled to UE device 10 using wired or wireless connections (e.g., some of input-output devices 22 may be peripherals that are coupled to a main processing unit or other portion of UE device 10 via a wired or wireless link).

Input-output circuitry 20 may include wireless circuitry 24 to support wireless communications. Wireless circuitry 24 (sometimes referred to herein as wireless communications circuitry 24) may include one or more antennas 30.

Wireless circuitry 24 may also include transceiver circuitry 26. Transceiver circuitry 26 may include transmitter circuitry, receiver circuitry, modulator circuitry, demodulator circuitry (e.g., one or more modems), radio-frequency circuitry, one or more radios, intermediate frequency circuitry, optical transmitter circuitry, optical receiver circuitry, optical light sources, other optical components, baseband circuitry (e.g., one or more baseband processors), amplifier circuitry, clocking circuitry such as one or more local oscillators and/or phase-locked loops, memory, one or more registers, filter circuitry, switching circuitry, analog-to-digital converter (ADC) circuitry, digital-to-analog converter (DAC) circuitry, radio-frequency transmission lines, optical fibers, and/or any other circuitry for transmitting and/or receiving wireless signals using antennas 30. The components of transceiver circuitry 26 may be implemented on one integrated circuit, chip, system-on-chip (SOC), die, printed circuit board, substrate, or package, or the components of transceiver circuitry 26 may be distributed across two or more integrated circuits, chips, SOCs, printed circuit boards, substrates, and/or packages.

The example of FIG. 1 is merely illustrative. While control circuitry 14 is shown separately from wireless circuitry 24 in the example of FIG. 1 for the sake of clarity, wireless circuitry 24 may include processing circuitry (e.g., one or more processors) that forms a part of processing circuitry 18 and/or storage circuitry that forms a part of storage circuitry 16 of control circuitry 14 (e.g., portions of control circuitry 14 may be implemented on wireless circuitry 24). As an example, control circuitry 14 may include baseband circuitry (e.g., one or more baseband processors), digital control circuitry, analog control circuitry, and/or other control circuitry that forms part of wireless circuitry 24. The baseband circuitry may, for example, access a communication protocol stack on control circuitry 14 (e.g., storage circuitry 16) to: perform user plane functions at a PHY layer, MAC layer, RLC layer, PDCP layer, SDAP layer, and/or PDU layer, and/or to perform control plane functions at the PHY layer, MAC layer, RLC layer, PDCP layer, RRC, layer, and/or non-access stratum layer.

Transceiver circuitry 26 may be coupled to each antenna 30 in wireless circuitry 24 over a respective signal path 28. Each signal path 28 may include one or more radio-frequency transmission lines, waveguides, optical fibers, and/or any other desired lines/paths for conveying wireless signals between transceiver circuitry 26 and antenna 30. Antennas 30 may be formed using any desired antenna structures for conveying wireless signals. For example, antennas 30 may include antennas with resonating elements that are formed from dipole antenna structures, planar dipole antenna structures (e.g., bowtie antenna structures), slot antenna structures, loop antenna structures, patch antenna structures, inverted-F antenna structures, planar inverted-F antenna structures, helical antenna structures, monopole antennas, dipoles, hybrids of these designs, etc. Filter circuitry, switching circuitry, impedance matching circuitry, and/or other antenna tuning components may be adjusted to adjust the frequency response and wireless performance of antennas 30 over time.

If desired, two or more of antennas 30 may be integrated into a phased antenna array (sometimes referred to herein as a phased array antenna or an array of antenna elements) in which each of the antennas conveys wireless signals with a respective phase and magnitude that is adjusted over time so the wireless signals constructively and destructively interfere to produce (form) a signal beam in a given pointing direction. The term "convey wireless signals" as used herein means the transmission and/or reception of the wireless signals (e.g., for performing unidirectional and/or bidirectional wireless communications with external wireless communications equipment). Antennas 30 may transmit the wireless signals by radiating the signals into free space (or to free space through intervening device structures such as a dielectric cover layer). Antennas 30 may additionally or alternatively receive the wireless signals from free space (e.g., through intervening devices structures such as a dielectric cover layer). The transmission and reception of wireless signals by antennas 30 each involve the excitation or resonance of antenna currents on an antenna resonating (radiating) element in the antenna by the wireless signals within the frequency band(s) of operation of the antenna.

Transceiver circuitry 26 may use antenna(s) 30 to transmit and/or receive wireless signals that convey wireless communications data between device 10 and external wireless communications equipment (e.g., one or more other devices such as device 10, a wireless access point or base station, etc.). The wireless communications data may be conveyed bidirectionally or unidirectionally. The wireless communications data may, for example, include data that has been encoded into corresponding data packets such as wireless data associated with a telephone call, streaming media content, internet browsing, wireless data associated with software applications running on device 10, email messages, etc.

Additionally or alternatively, wireless circuitry 24 may use antenna(s) 30 to perform wireless sensing operations. The sensing operations may allow device 10 to detect (e.g., sense or identify) the presence, location, orientation, and/or velocity (motion) of objects external to device 10. Control circuitry 14 may use the detected presence, location, orientation, and/or velocity of the external objects to perform any desired device operations. As examples, control circuitry 14 may use the detected presence, location, orientation, and/or velocity of the external objects to identify a corresponding user input for one or more software applications running on device 10 such as a gesture input performed by the user's hand(s) or other body parts or performed by an external stylus, gaming controller, head-mounted device, or other peripheral devices or accessories, to determine when one or more antennas 30 needs to be disabled or provided with a reduced maximum transmit power level (e.g., for satisfying regulatory limits on radio-frequency exposure), to determine how to steer (form) a radio-frequency signal beam produced by antennas 30 for wireless circuitry 24 (e.g., in scenarios where antennas 30 include a phased array of antennas 30), to map or model the environment around device 10 (e.g., to produce a software model of the room where device 10 is located for use by an augmented reality application, gaming application, map application, home design application, engineering application, etc.), to detect the presence of obstacles in the vicinity of (e.g., around) device 10 or in the direction of motion of the user of device 10, etc. The sensing operations may, for example, involve the transmission of sensing signals (e.g., radar waveforms), the receipt of corresponding reflected signals (e.g., the transmitted waveforms that have reflected off of external objects), and the processing of the transmitted signals and the received reflected signals (e.g., using a radar scheme).

Wireless circuitry 24 may transmit and/or receive wireless signals within corresponding frequency bands of the electromagnetic spectrum (sometimes referred to herein as communications bands or simply as "bands"). The frequency bands handled by wireless circuitry 24 may include wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), wireless personal area network (WPAN) frequency bands such as the 2.4 GHz Bluetooth^{®} band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, 6G bands, etc.), other centimeter or millimeter wave frequency bands between 10-100 GHz, near-field communications frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, communications bands under the family of 3GPP wireless communications standards, communications bands under the IEEE 802.XX family of standards, and/or any other desired frequency bands of interest.

Over time, software applications on electronic devices such as device 10 have become more and more data intensive. Wireless circuitry on the electronic devices therefore needs to support data transfer at higher and higher data rates. In general, the data rates supported by the wireless circuitry are proportional to the frequency of the wireless signals conveyed by the wireless circuitry (e.g., higher frequencies can support higher data rates than lower frequencies). Wireless circuitry 24 may convey centimeter and millimeter wave signals to support relatively high data rates (e.g., because centimeter and millimeter wave signals are at relatively high frequencies between around 10 GHz and 100 GHz). However, the data rates supported by centimeter and millimeter wave signals may still be insufficient to meet all the data transfer needs of device 10. To support even higher data rates such as data rates up to 5-100 Gbps or higher, wireless circuitry 24 may convey wireless signals at frequencies greater than about 100 GHz.

As shown in FIG. 1, wireless circuitry 24 may transmit wireless signals 32 and/or may receive wireless signals 32 at frequencies greater than around 100 GHz (e.g., greater than 70 GHz, 80 GHz, 90 GHz, 110 GHz, etc.). Wireless signals 32 may sometimes be referred to herein as tremendously high frequency (THF) signals 32, sub-THz signals 32, THz signals 32, or sub-millimeter wave signals 32. THF signals 32 may be at sub-THz or THz frequencies such as frequencies between 100 GHz and 1 THz, between 80 GHz and 10 THz, between 100 GHz and 10 THz, between 100 GHz and 2 THz, between 200 GHz and 1 THz, between 300 GHz and 1 THz, between 300 GHz and 2 THz, between 70 GHz and 2 THz, between 300 GHz and 10 THz, between 100 GHz and 800 GHz, between 200 GHz and 1.5 THz, etc. (e.g., within a sub-THz, THz, THF, or sub-millimeter frequency band such as a 6G frequency band). The high data rates supported by these frequencies may be leveraged by device 10 to perform cellular telephone voice and/or data communications (e.g., while supporting spatial multiplexing to provide further data bandwidth), to perform spatial ranging operations such as radar operations to detect the presence, location, and/or velocity of objects external to device 10, to perform automotive sensing (e.g., with enhanced security), to perform health/body monitoring on a user of device 10 or another person, to perform gas or chemical detection, to form a high data rate wireless connection between device 10 and another device or peripheral device (e.g., to form a high data rate connection between a display driver on device 10 and a display that displays ultra-high resolution video), to form a remote radio head (e.g., a flexible high data rate connection), to form a THF chip-to-chip connection within device 10 that supports high data rates (e.g., where one antenna 30 on a first chip in device 10 transmits THF signals 32 to another antenna 30 on a second chip in device 10), and/or to perform any other desired high data rate operations.

Space is at a premium within electronic devices such as device 10. In some scenarios, different antennas 30 are used to transmit THF signals 32 than are used to receive THF signals 32. However, handling transmission of THF signals 32 and reception of THF signals 32 using different antennas 30 can consume an excessive amount of space and other resources within device 10 because two antennas 30 and signal paths 28 would be required to handle both transmission and reception. To minimize space and resource consumption within device 10, the same antenna 30 and signal path 28 may be used to both transmit THF signals 32 and to receive THF signals 32. If desired, multiple antennas 30 in wireless circuitry 24 may transmit THF signals 32 and may receive THF signals 32. The antennas may be integrated into a phased antenna array that transmits THF signals 32 and that receives THF signals 32 within a corresponding signal beam oriented in a selected beam pointing direction.

As shown in FIG. 1, AP 6 may also include control circuitry 14' (e.g., control circuitry having similar components and/or functionality as control circuitry 14 in UE device 10) and wireless circuitry 24' (e.g., wireless circuitry having similar components and/or functionality as wireless circuitry 24' in UE device 10). Wireless circuitry 24' may include transceiver circuitry 26' (e.g., transceiver circuitry having similar components and/or functionality as transceiver circuitry 26 in UE device 10) coupled to two or more antennas 30' (e.g., antennas having similar components and/or functionality as antennas 30 in UE device 10) over corresponding signal paths 28' (e.g., signal paths having similar components and/or functionality as signal paths 28 in UE device 10). Antennas 30' may be arranged in one or more phased antenna arrays. AP 6 may use wireless circuitry 24' to transmit THF signals 32 to UE device 10 (e.g., as downlink (DL) signals transmitted in downlink direction 31) and/or to receive THF signals 32 transmitted by UE device 10 (e.g., as uplink (UL) signals transmitted in uplink direction 29).

It can be challenging to incorporate components into wireless circuitry 24 and 24' that support wireless communications at these high frequencies. If desired, transceiver circuitry 26 and 26' and signal paths 28 and 28' may include optical components that convey optical signals to support the transmission and reception of THF signals 32 in a space and resource-efficient manner. The optical signals may be used in transmitting THF signals 32 at THF frequencies and/or in receiving THF signals 32 at THF frequencies.

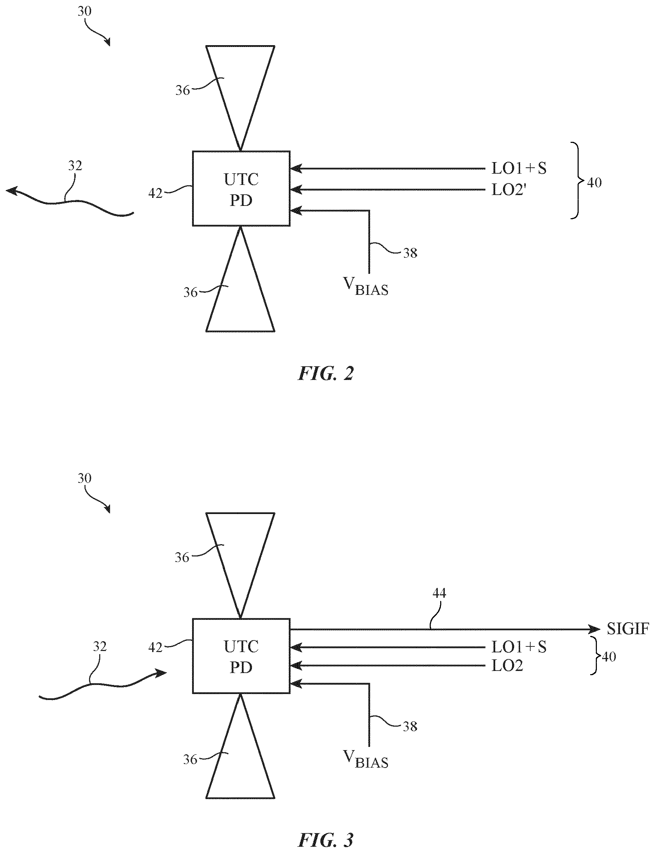

FIG. 2 is a diagram of an illustrative antenna 30 that may be used to both transmit THF signals 32 and to receive THF signals 32 in examples where AP 6 is an electro-optical device that conveys THF signals 32 using optical signals. This is merely illustrative. In particular, FIGS. 2-7 illustrate one exemplary implementation for how antenna 30 (or antenna 30' in AP 6) may convey THF signals 32 using optical signals (e.g., in an example where UE device 10 and/or AP 6 are electro-optical devices). This is merely illustrative and, in general, UE device 10 and AP 6 may generate and convey THF signals using any desired array architecture(s) (e.g., where antenna 30 is fed using one or more transmission lines and one or more phase and magnitude controllers). AP 6 and UE device 10 need not be electro-optical devices. Antenna 30 may include one or more antenna radiating (resonating) elements 36 such as radiating (resonating) element arms. In the example of FIG. 2, antenna 30 is a planar dipole antenna (sometimes referred to as a "bowtie" antenna) having an antenna resonating element 36 with two opposing resonating element arms (e.g., bowtie arms or dipole arms). This is merely illustrative and, in general, antenna 30 may be any type of antenna having any desired antenna radiating element architecture.

As shown in FIG. 2 (e.g., in implementations where UE device 10 or AP 6 is an electro-optical device), antenna 30 includes a photodiode (PD) 42 coupled between the arms of antenna resonating element 36. Electronic devices that include antennas 30 with photodiodes 42 such as device 10 may sometimes also be referred to as electro-optical devices. Photodiode 42 may be a programmable photodiode. An example in which photodiode 42 is a programmable uni-travelling-carrier photodiode (UTC PD) is described herein as an example. Photodiode 42 may therefore sometimes be referred to herein as UTC PD 42 or programmable UTC PD 42. This is merely illustrative and, in general, photodiode 42 may include any desired type of adjustable/programmable photodiode or component that converts electromagnetic energy at optical frequencies to current at THF frequencies on antenna resonating element 36 and/or vice versa (e.g., a p-i-n diode, a tunneling diode, a TW UTC photodiode, other diodes with quadratic characteristics, an LT-GaAS photodiode, an M-UTC photodiode, etc.). Each radiating element arm in antenna resonating element 36 may, for example, have a first edge at UTC PD 42 and a second edge opposite the first edge that is wider than the first edge (e.g., in implementations where antenna 30 is a bowtie antenna). Other radiating elements may be used if desired.

UTC PD 42 may have a bias terminal (input) 38 that receives one or more control signals V_{BIAS}. Control signals V_{BIAS} may include bias voltages provided at one or more voltage levels and/or other control signals for controlling the operation of UTC PD 42 such as impedance adjustment control signals for adjusting the output impedance of UTC PD 42. Control circuitry 14 (FIG. 1) may provide (e.g., apply, supply, assert, etc.) control signals V_{BIAS} at different settings (e.g., values, magnitudes, etc.) to dynamically control (e.g., program or adjust) the operation of UTC PD 42 over time. For example, control signals V_{BIAS} may be used to control whether antenna 30 transmits THF signals 32 or receives THF signals 32. When control signals V_{BIAS} include a bias voltage asserted at a first level or magnitude, antenna 30 may be configured to transmit THF signals 32. When control signals V_{BIAS} include a bias voltage asserted at a second level or magnitude, antenna 30 may be configured to receive THF signals 32. In the example of FIG. 2, control signals V_{BIAS} include the bias voltage asserted at the first level to configure antenna 30 to transmit THF signals 32. If desired, control signals V_{BIAS} may also be adjusted to control the waveform of the THF signals (e.g., as a squaring function that preserves the modulation of incident optical signals, a linear function, etc.), to perform gain control on the signals conveyed by antenna 30, and/or to adjust the output impedance of UTC PD 42.

As shown in FIG. 2 (e.g., in implementations where UE device 10 or AP 6 is an electro-optical device), UTC PD 42 may be optically coupled to optical path 40. Optical path 40 may include one or more optical fibers or waveguides. UTC PD 42 may receive optical signals from transceiver circuitry 26 (FIG. 1) over optical path 40. The optical signals may include a first optical local oscillator (LO) signal LO1 and a second optical local oscillator signal LO2. Optical local oscillator signals LO1 and LO2 may be generated by light sources in transceiver circuitry 26 (FIG. 1). Optical local oscillator signals LO1 and LO2 may be at optical wavelengths (e.g., between 400 nm and 700 nm), ultra-violet wavelengths (e.g., near-ultra-violet or extreme ultraviolet wavelengths), and/or infrared wavelengths (e.g., near-infrared wavelengths, mid-infrared wavelengths, or far-infrared wavelengths). Optical local oscillator signal LO2 may be offset in wavelength from optical local oscillator signal LO1 by a wavelength offset X. Wavelength offset X may be equal to the wavelength of the THF signals conveyed by antenna 30 (e.g., between 100 GHz and 1 THz (1000 GHz), between 100 GHz and 2 THz, between 300 GHz and 800 GHz, between 300 GHz and 1 THz, between 300 and 400 GHz, etc.).

During signal transmission, wireless data (e.g., wireless data packets, symbols, frames, etc.) may be modulated onto optical local oscillator signal LO2 to produce modulated optical local oscillator signal LO2'. If desired, optical local oscillator signal LO1 may be provided with an optical phase shift S. Optical path 40 may illuminate UTC PD 42 with optical local oscillator signal LO1 (plus the optical phase shift S when applied) and modulated optical local oscillator signal LO2'. If desired, lenses or other optical components may be interposed between optical path 40 and UTC PD 42 to help focus the optical local oscillator signals onto UTC PD 42.

UTC PD 42 may convert optical local oscillator signal LO1 and modulated local oscillator signal LO2' (e.g., beats between the two optical local oscillator signals) into antenna currents that run along the perimeter of the radiating element arms in antenna resonating element 36. The frequency of the antenna current is equal to the frequency difference between local oscillator signal LO1 and modulated local oscillator signal LO2'. The antenna currents may radiate (transmit) THF signals 32 into free space. Control signal V_{BIAS} may control UTC PD 42 to convert the optical local oscillator signals into antenna currents on the radiating element arms in antenna resonating element 36 while preserving the modulation and thus the wireless data on modulated local oscillator signal LO2' (e.g., by applying a squaring function to the signals). THF signals 32 will thereby carry the modulated wireless data for reception and demodulation by external wireless communications equipment.

FIG. 3 is a diagram showing how antenna 30 may receive THF signals 32 (e.g., after changing the setting of control signals V_{BIAS} into a reception state from the transmission state of FIG. 2, in implementations where UE device 10 or AP 6 is an electro-optical device). As shown in FIG. 3, THF signals 32 may be incident upon the antenna radiating element arms of antenna resonating element 36. The incident THF signals 32 may produce antenna currents that flow around the perimeter of the radiating element arms in antenna resonating element 36. UTC PD 42 may use optical local oscillator signal LO1 (plus the optical phase shift S when applied), optical local oscillator signal LO2 (e.g., without modulation), and control signals V_{BIAS} (e.g., a bias voltage asserted at the second level) to convert the received THF signals 32 into intermediate frequency signals SIGIF that are output onto intermediate frequency signal path 44.

The frequency of intermediate frequency signals SIGIF may be equal to the frequency of THF signals 32 minus the difference between the frequency of optical local oscillator signal LO 1 and the frequency of optical local oscillator signal LO2. As an example, intermediate frequency signals SIGIF may be at lower frequencies than THF signals such as centimeter or millimeter wave frequencies between 10 GHz and 100 GHz, between 30 GHz and 80 GHz, around 60 GHz, etc. If desired, transceiver circuitry 26 (FIG. 1) may change the frequency of optical local oscillator signal LO1 and/or optical local oscillator signal LO2 when switching from transmission to reception or vice versa. UTC PD 42 may preserve the data modulation of THF signals 32 in intermediate signals SIGIF. A receiver in transceiver circuitry 26 (FIG. 1) may demodulate intermediate frequency signals SIGIF (e.g., after further downconversion) to recover the wireless data from THF signals 32. In another example, wireless circuitry 24 may convert intermediate frequency signals SIGIF to the optical domain before recovering the wireless data. In yet another example, intermediate frequency signal path 44 may be omitted and UTC PD 42 may convert THF signals 32 into the optical domain for subsequent demodulation and data recovery (e.g., in a sideband of the optical signal).

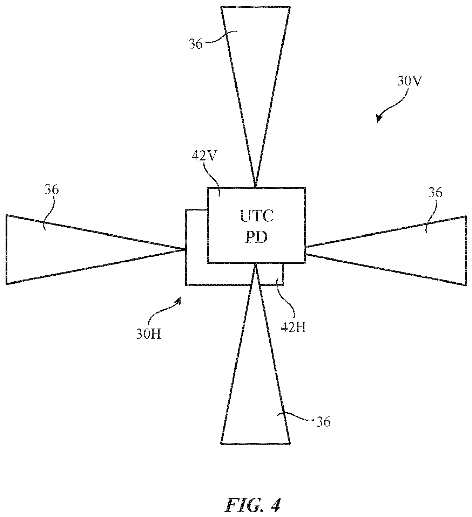

While FIGS. 2 and 3 show an illustrative antenna 30 from UE device 10, similar structures may additionally or alternatively be used to form antenna 30' on AP 6 (e.g., where antenna 30' conveys signals for transceiver circuitry 26' in wireless circuitry 24' of FIG. 1 instead of for transceiver circuitry 26 in wireless circuitry 24 as described in connection with FIGS. 2 and 3). The antenna 30 of FIGS. 2 and 3 may support transmission of THF signals 32 and reception of THF signals 32 with a given polarization (e.g., a linear polarization such as a vertical polarization). If desired, wireless circuitry 24 and/or 24' (FIG. 1) may include multiple antennas 30 and/or 30' for covering different polarizations. FIG. 4 is a diagram showing one example of how wireless circuitry 24 in UE device 10 may include multiple antennas 30 for covering different polarizations. While FIGS. 4 shows illustrative antennas 30 from UE device 10, similar structures may additionally or alternatively be used to form antenna 30' on AP 6.

As shown in FIG. 4, the wireless circuitry may include a first antenna 30 such as antenna 30V for covering a first polarization (e.g., a first linear polarization such as a vertical polarization) and may include a second antenna 30 such as antenna 30H for covering a second polarization different from or orthogonal to the first polarization (e.g., a second linear polarization such as a horizontal polarization). Antenna 30V may have a UTC PD 42 such as UTC PD 42V coupled between a corresponding pair of radiating element arms in antenna resonating element 36. Antenna 30H may have a UTC PD 42 such as UTC PD 42H coupled between a corresponding pair of radiating element arms in antenna resonating element 36 oriented non-parallel (e.g., orthogonal) to the radiating element arms in antenna resonating element 36 of antenna 30V. This may allow antennas 30V and 30H to transmit THF signals 32 with respective (orthogonal) polarizations and may allow antennas 30V and 30H to receive THF signals 32 with respective (orthogonal) polarizations.

To minimize space within device 10, antenna 30V may be vertically stacked over or under antenna 30H (e.g., where UTC PD 42V partially or completely overlaps UTC PD 42H). In this example, antennas 30V and 30H may both be formed on the same substrate such as a rigid or flexible printed circuit board. The substrate may include multiple stacked dielectric layers (e.g., layers of ceramic, epoxy, flexible printed circuit board material, rigid printed circuit board material, etc.). The antenna resonating element 36 in antenna 30V may be formed on a separate layer of the substrate than the antenna resonating element 36 in antenna 30H or the antenna resonating element 36 in antenna 30V may be formed on the same layer of the substrate as the antenna resonating element 36 in antenna 30H. UTC PD 42V may be formed on the same layer of the substrate as UTC PD 42H or UTC PD 42V may be formed on a separate layer of the substrate than UTC PD 42H. UTC PD 42V may be formed on the same layer of the substrate as the antenna resonating element 36 in antenna 30V or may be formed on a separate layer of the substrate as the antenna resonating element 36 in antenna 30V. UTC PD 42H may be formed on the same layer of the substrate as the antenna resonating element 36 in antenna 30H or may be formed on a separate layer of the substrate as the antenna resonating element 36 in antenna 30H.

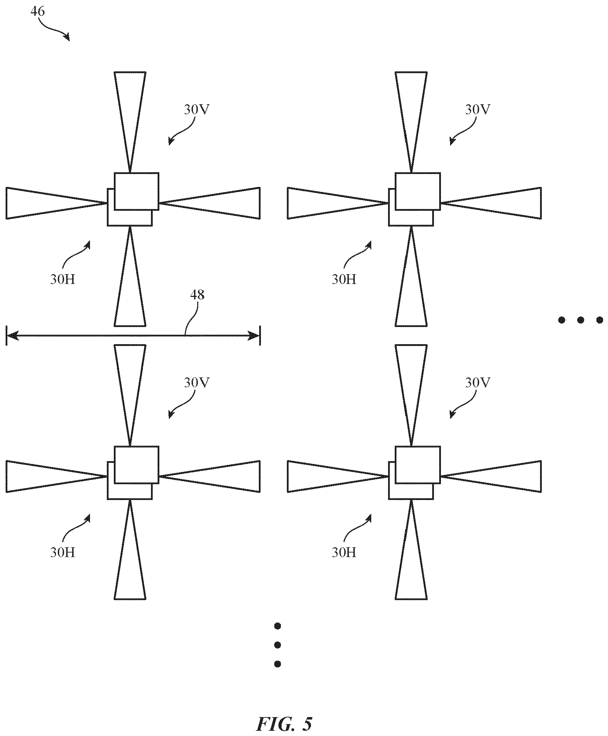

If desired, antennas 30 or antennas 30H and 30V of FIG. 4 may be integrated within a phased antenna array. FIG. 5 is a diagram showing one example of how antennas 30H and 30V may be integrated within a phased antenna array. As shown in FIG. 5, UE device 10 may include a phased antenna array 46 of stacked antennas 30H and 30V arranged in a rectangular grid of rows and columns. Each of the antennas in phased antenna array 46 may be formed on the same substrate. This is merely illustrative. In general, phased antenna array 46 may include any desired number of antennas 30V and 30H (or non-stacked antennas 30) arranged in any desired pattern. Each of the antennas in phased antenna array 46 may be provided with a respective optical phase shift S (FIGS. 2 and 3) that configures the antennas to collectively transmit THF signals 32 and/or receive THF signals 32 that sum to form a signal beam of THF signals in a desired beam pointing direction. The beam pointing direction may be selected to point the signal beam towards external communications equipment, towards a desired external object, away from an external object, etc. Phased antenna array 46 may also sometimes be referred to herein as an array of antenna elements (e.g., where each antenna 30V and each antenna 30H or the antenna radiating elements thereof forms a respective antenna element in the array of antenna elements).

Phased antenna array 46 may occupy relatively little space within device 10. For example, each antenna 30V/30H may have a length 48 (e.g., as measured from the end of one radiating element arm to the opposing end of the opposite radiating element arm). Length 48 may be approximately equal to onehalf the wavelength of THF signals 32. For example, length 48 may be as small as 0.5 mm or less. Each UTC-PD 42 in phased antenna array 46 may occupy a lateral area of 100 square microns or less. This may allow phased antenna array 46 to occupy very little area within UE device 10, thereby allowing the phased antenna array to be integrated within different portions of device 10 while still allowing other space for device components. While FIG. 5 shows an illustrative phased antenna array that may be formed in UE device 10, similar structures may additionally or alternatively be used to form a phased antenna array on AP 6 (e.g., using antennas 30' of FIG. 1). The examples of FIGS. 2-5 are merely illustrative and, in general, each antenna may have any desired antenna radiating element architecture.

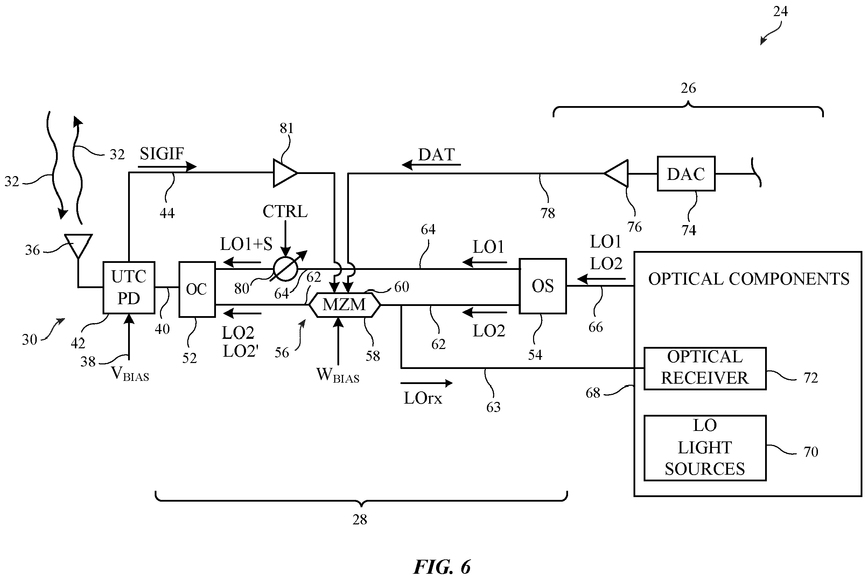

FIG. 6 is a circuit diagram showing how a given antenna 30, signal path 28, and transceiver circuitry 26 may be used to both transmit THF signals 32 and receive THF signals 32 based on optical local oscillator signals. While FIG. 6 illustrates an antenna 30, signal path 28, and transceiver circuitry 26 from UE device 10, similar structures may additionally or alternatively be used to form antenna 30', signal path 28', and transceiver circuitry 26, respectively, on AP 6 (FIG. 1). In the example of FIG. 6, UTC PD 42 converts received THF signals 32 into intermediate frequency signals SIGIF that are then converted to the optical domain for recovering the wireless data from the received THF signals.

As shown in FIG. 6, wireless circuitry 24 may include transceiver circuitry 26 coupled to antenna 30 over signal path 28 (e.g., an optical signal path sometimes referred to herein as optical signal path 28). UTC PD 42 may be coupled between the radiating element arm(s) in antenna resonating element 36 of antenna 30 and signal path 28. Transceiver circuitry 26 may include optical components 68, amplifier circuitry such as power amplifier 76, and digital-to-analog converter (DAC) 74. Optical components 68 may include an optical receiver such as optical receiver 72 and optical local oscillator (LO) light sources (emitters) 70. LO light sources 70 may include two or more light sources such as laser light sources, laser diodes, optical phase locked loops, or other optical emitters that emit light (e.g., optical local oscillator signals LO1 and LO2) at respective wavelengths. If desired, LO light sources 70 may include a single light source and may include optical components for splitting the light emitted by the light source into different wavelengths. Signal path 28 may be coupled to optical components 68 over optical path 66. Optical path 66 may include one or more optical fibers and/or waveguides.

Signal path 28 may include an optical splitter such as optical splitter (OS) 54, optical paths such as optical path 64 and optical path 62, an optical combiner such as optical combiner (OC) 52, and optical path 40. Optical path 62 may be an optical fiber or waveguide. Optical path 64 may be an optical fiber or waveguide. Optical splitter 54 may have a first (e.g., input) port coupled to optical path 66, a second (e.g., output) port coupled to optical path 62, and a third (e.g., output) port coupled to optical path 64. Optical path 64 may couple optical splitter 54 to a first (e.g., input) port of optical combiner 52. Optical path 62 may couple optical splitter 54 to a second (e.g., input) port of optical combiner 52. Optical combiner 52 may have a third (e.g., output) port coupled to optical path 40.

An optical phase shifter such as optical phase shifter 80 may be (optically) interposed on or along optical path 64. An optical modulator such as optical modulator 56 may be (optically) interposed on or along optical path 62. Optical modulator 56 may be, for example, a Mach-Zehnder modulator (MZM) and may therefore sometimes be referred to herein as MZM 56. MZM 56 includes a first optical arm (branch) 60 and a second optical arm (branch) 58 interposed in parallel along optical path 62. Propagating optical local oscillator signal LO2 along arms 60 and 58 of MZM 56 may, in the presence of a voltage signal applied to one or both arms, allow different optical phase shifts to be imparted on each arm before recombining the signal at the output of the MZM (e.g., where optical phase modulations produced on the arms are converted to intensity modulations at the output of MZM 56). When the voltage applied to MZM 56 includes wireless data, MZM 56 may modulate the wireless data onto optical local oscillator signal LO2. If desired, the phase shifting performed at MZM 56 may be used to perform beam forming/steering in addition to or instead of optical phase shifter 80. MZM 56 may receive one or more bias voltages W_{BIAS} (sometimes referred to herein as bias signals W_{BIAS}) applied to one or both of arms 58 and 60. Control circuitry 14 (FIG. 1) may provide bias voltage W_{BIAS} with different magnitudes to place MZM 56 into different operating modes (e.g., operating modes that suppress optical carrier signals, operating modes that do not suppress optical carrier signals, etc.).

Intermediate frequency signal path 44 may couple UTC PD 42 to MZM 56 (e.g., arm 60). An amplifier such as low noise amplifier 81 may be interposed on intermediate frequency signal path 44. Intermediate frequency signal path 44 may be used to pass intermediate frequency signals SIGIF from UTC PD 42 to MZM 56. DAC 74 may have an input coupled to up-conversion circuitry, modulator circuitry, and/or baseband circuitry in a transmitter of transceiver circuitry 26. DAC 74 may receive digital data to transmit over antenna 30 and may convert the digital data to the analog domain (e.g., as data DAT). DAC 74 may have an output coupled to transmit data path 78. Transmit data path 78 may couple DAC 74 to MZM 56 (e.g., arm 60). Each of the components along signal path 28 may allow the same antenna 30 to both transmit THF signals 32 and receive THF signals 32 (e.g., using the same components along signal path 28), thereby minimizing space and resource consumption within device 10.

LO light sources 70 may produce (emit) optical local oscillator signals LO1 and LO2 (e.g., at different wavelengths that are separated by the wavelength of THF signals 32). Optical components 68 may include lenses, waveguides, optical couplers, optical fibers, and/or other optical components that direct the emitted optical local oscillator signals LO1 and LO2 towards optical splitter 54 via optical path 66. Optical splitter 54 may split the optical signals on optical path 66 (e.g., by wavelength) to output optical local oscillator signal LO1 onto optical path 64 while outputting optical local oscillator signal LO2 onto optical path 62.

Control circuitry may provide phase control signals CTRL to optical phase shifter 80. Phase control signals CTRL may control optical phase shifter 80 to apply optical phase shift S to the optical local oscillator signal LO1 on optical path 64. Phase shift S may be selected to steer a signal beam of THF signals 32 in a desired pointing direction. Optical phase shifter 80 may pass the phase-shifted optical local oscillator signal LO1 (denoted as LO1 + S) to optical combiner 52. Signal beam steering is performed in the optical domain (e.g., using optical phase shifter 80) rather than in the THF domain because there are no satisfactory phase shifting circuit components that operate at frequencies as high as the frequencies of THF signals 32. Optical combiner 52 may receive optical local oscillator signal LO2 over optical path 62. Optical combiner 52 may combine optical local oscillator signals LO1 and LO2 onto optical path 40, which directs the optical local oscillator signals onto UTC PD 42 for use during signal transmission or reception.

During transmission of THF signals 32, DAC 74 may receive digital wireless data (e.g., data packets, frames, symbols, etc.) for transmission over THF signals 32. DAC 74 may convert the digital wireless data to the analog domain and may output (transmit) the data onto transmit data path 78 as data DAT (e.g., for transmission via antenna 30). Power amplifier 76 may amplify data DAT. Transmit data path 78 may pass data DAT to MZM 56 (e.g., arm 60). MZM 56 may modulate data DAT onto optical local oscillator signal LO2 to produce modulated optical local oscillator signal LO2' (e.g., an optical local oscillator signal at the frequency/wavelength of optical local oscillator signal LO2 but that is modulated to include the data identified by data DAT). Optical combiner 52 may combine optical local oscillator signal LO1 with modulated optical local oscillator signal LO2' at optical path 40.

Optical path 40 may illuminate UTC PD 42 with (using) optical local oscillator signal LO1 (e.g., with the phase shift S applied by optical phase shifter 80) and modulated optical local oscillator signal LO2'. Control circuitry may apply a control signal V_{BIAS} to UTC PD 42 that configures antenna 30 for the transmission of THF signals 32. UTC PD 42 may convert optical local oscillator signal LO1 and modulated optical local oscillator signal LO2' into antenna currents on antenna resonating element 36 at the frequency of THF signals 32 (e.g., while programmed for transmission using control signal V_{BIAS}). The antenna currents on antenna resonating element 36 may radiate THF signals 32. The frequency of THF signals 32 is given by the difference in frequency between optical local oscillator signal LO1 and modulated optical local oscillator signal LO2'. Control signals V_{BIAS} may control UTC PD 42 to preserve the modulation from modulated optical local oscillator signal LO2' in the radiated THF signals 32. External equipment that receives THF signals 32 will thereby be able to extract data DAT from the THF signals 32 transmitted by antenna 30.

During reception of THF signals 32, MZM 56 does not modulate any data onto optical local oscillator signal LO2. Optical path 40 therefore illuminates UTC PD 42 with optical local oscillator signal LO1 (e.g., with phase shift S) and optical local oscillator signal LO2. Control circuitry may apply a control signal V_{BIAS} (e.g., a bias voltage) to UTC PD 42 that configures antenna 30 for the receipt of THF signals 32. UTC PD 42 may use optical local oscillator signals LO1 and LO2 to convert the received THF signals 32 into intermediate frequency signals SIGIF output onto intermediate frequency signal path 44 (e.g., while programmed for reception using bias voltage V_{BIAS}). Intermediate frequency signals SIGIF may include the modulated data from the received THF signals 32. Low noise amplifier 81 may amplify intermediate frequency signals SIGIF, which are then provided to MZM 56 (e.g., arm 60). MZM 56 may convert intermediate frequency signals SIGIF to the optical domain as optical signals LOrx (e.g., by modulating the data in intermediate frequency signals SIGIF onto one of the optical local oscillator signals) and may pass the optical signals to optical receiver 72 in optical components 68, as shown by arrow 63 (e.g., via optical paths 62 and 66 or other optical paths). Control circuitry may use optical receiver 72 to convert optical signals LOrx to other formats and to recover (demodulate) the data carried by THF signals 32 from the optical signals. In this way, the same antenna 30 and signal path 28 may be used for both the transmission and reception of THF signals while also performing beam steering operations.

The example of FIG. 6 in which intermediate frequency signals SIGIF are converted to the optical domain is merely illustrative. If desired, transceiver circuitry 26 may receive and demodulate intermediate frequency signals SIGIF without first passing the signals to the optical domain. For example, transceiver circuitry 26 may include an analog-to-digital converter (ADC), intermediate frequency signal path 44 may be coupled to an input of the ADC rather than to MZM 56, and the ADC may convert intermediate frequency signals SIGIF to the digital domain. As another example, intermediate frequency signal path 44 may be omitted and control signals V_{BIAS} may control UTC PD 42 to directly sample THF signals 32 with optical local oscillator signals LO1 and LO2 to the optical domain. As an example, UTC PD 42 may use the received THF signals 32 and control signals V_{BIAS} to produce an optical signal on optical path 40. The optical signal may have an optical carrier with sidebands that are separated from the optical carrier by a fixed frequency offset (e.g., 30-100 GHz, 60 GHz, 50-70 GHz, 10-100 GHz, etc.). The sidebands may be used to carry the modulated data from the received THF signals 32. Signal path 28 may direct (propagate) the optical signal produced by UTC PD 42 to optical receiver 72 in optical components 68 (e.g., via optical paths 40, 64, 62, 66, 63, and/or other optical paths). Control circuitry may use optical receiver 72 to convert the optical signal to other formats and to recover (demodulate) the data carried by THF signals 32 from the optical signal (e.g., from the sidebands of the optical signal).

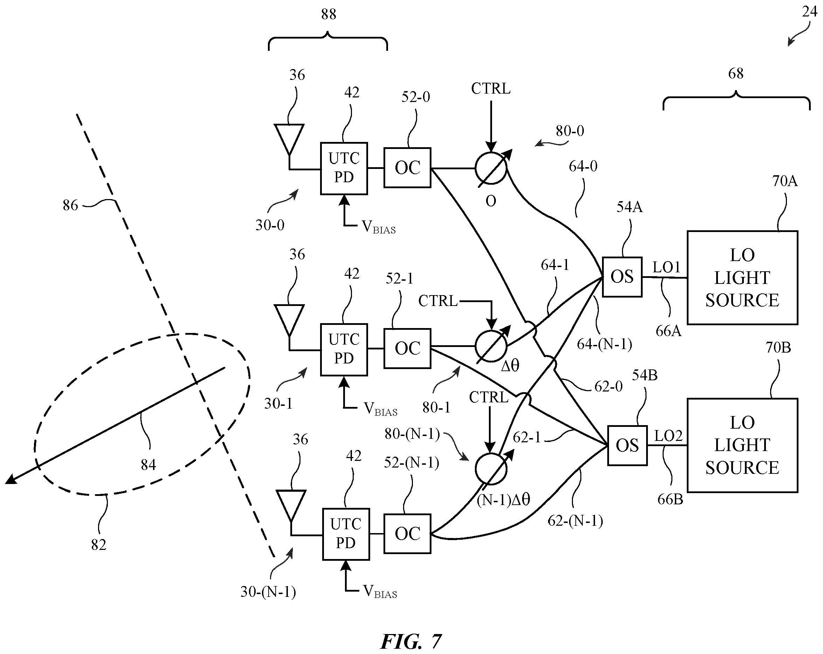

FIG. 7 is a circuit diagram showing one example of how multiple antennas 30 may be integrated into a phased antenna array 88 that conveys THF signals over a corresponding signal beam (e.g., in examples where UE device 10 and/or AP 6 are electro-optical or photonic devices). The example of FIG. 7 is merely illustrative and, in general, phased antenna array 88 may be implemented using any desired array architecture (e.g., phased antenna array 88 need not use optical signals for conveying THF signals 32 and, in general, may include a set of antennas 30/30' coupled to any respective phase and/or magnitude controllers that are used for performing the beamforming operations as described herein). In the example of FIG. 7, MZMs 56, intermediate frequency signal paths 44, data paths 78, and optical receiver 72 of FIG. 6 have been omitted for the sake of clarity. Each of the antennas in phased antenna array 88 may alternatively sample received THF signals directly into the optical domain or may pass intermediate frequency signals SIGIF to ADCs in transceiver circuitry 26.

As shown in FIG. 7, phased antenna array 88 includes N antennas 30 such as a first antenna 30-0, a second antenna 30-1, an Nth antenna 30-(N-1), etc. Each of the antennas 30 in phased antenna array 88 may be coupled to optical components 68 via a respective optical signal path (e.g., optical signal path 28 of FIG. 6). Each of the N signal paths may include a respective optical combiner 52 coupled to the UTC PD 42 of the corresponding antenna 30 (e.g., the UTC PD 42 in antenna 30-0 may be coupled to optical combiner 52-0, the UTC PD 42 in antenna 30-1 may be coupled to optical combiner 52-1, the UTC PD 42 in antenna 30-(N-1) may be coupled to optical combiner 52-(N-1), etc.). Each of the N signal paths may also include a respective optical path 62 and a respective optical path 64 coupled to the corresponding optical combiner 52 (e.g., optical paths 64-0 and 62-0 may be coupled to optical combiner 52-0, optical paths 64-1 and 62-1 may be coupled to optical combiner 52-1, optical paths 64-(N-1) and 62-(N-1) may be coupled to optical combiner 52-(N-1), etc.).

Optical components 68 may include LO light sources 70 such as a first LO light source 70A and a second LO light source 70B. The optical signal paths for each of the antennas 30 in phased antenna array 88 may share one or more optical splitters 54 such as a first optical splitter 54A and a second optical splitter 54B. LO light source 70A may generate (e.g., produce, emit, transmit, etc.) first optical local oscillator signal LO1 and may provide first optical local oscillator signal LO1 to optical splitter 54A via optical path 66A. Optical splitter 54A may distribute first optical local oscillator signal LO1 to each of the UTC PDs 42 in phased antenna array 88 over optical paths 64 (e.g., optical paths 64-0, 64-1, 64-(N-1), etc.). Similarly, LO light source 70B may generate (e.g., produce, emit, transmit, etc.) second optical local oscillator signal LO2 and may provide second optical local oscillator signal LO2 to optical splitter 54B via optical path 66B. Optical splitter 54B may distribute second optical local oscillator signal LO2 to each of the UTC PDs 42 in phased antenna array 88 over optical paths 62 (e.g., optical paths 62-0, 62-1, 62-(N-1), etc.).

A respective optical phase shifter 80 may be interposed along (on) each optical path 64 (e.g., a first optical phase shifter 80-0 may be interposed along optical path 64-0, a second optical phase shifter 80-1 may be interposed along optical path 64-1, an Nth optical phase shifter 80-(N-1) may be interposed along optical path 64-(N-1), etc.). Each optical phase shifter 80 may receive a control signal CTRL that controls the phase S provided to optical local oscillator signal LO1 by that optical phase shifter (e.g., first optical phase shifter 80-0 may impart an optical phase shift of zero degrees/radians to the optical local oscillator signal LO1 provided to antenna 30-0, second optical phase shifter 80-1 may impart an optical phase shift of Δφ to the optical local oscillator signal LO1 provided to antenna 30-1, Nth optical phase shifter 80-(N-1) may impart an optical phase shift of (N-1)Δφ to the optical local oscillator signal LO1 provided to antenna 30-(N-1), etc.). By adjusting the phase S imparted by each of the N optical phase shifters 80, control circuitry 14 (FIG. 1) may control each of the antennas 30 in phased antenna array 88 to transmit THF signals 32 and/or to receive THF signals 32 within a formed signal beam 82. Signal beam 82 may be oriented in a particular beam pointing direction (angle) 84 (e.g., the direction of peak gain of signal beam 82). The THF signals conveyed by phased antenna array 88 may have wavefronts 86 that are orthogonal to beam pointing direction 84. Control circuitry 14 may adjust beam pointing direction 84 over time to point towards external communications equipment or an external object or to point away from external objects, as examples. While FIG. 7 shows an illustrative phased antenna array 88 of antennas 30 from UE device 10, similar structures may additionally or alternatively be used to form a phased antenna array of antennas 30' in AP 6 (sometimes referred to herein as phased antenna array 88').

While communications at frequencies greater than about 100 GHz allow for extremely high data rates (e.g., greater than 100 Gbps), radio-frequency signals at such high frequencies are subject to significant attenuation during propagation over-the-air. Integrating antennas 30 and 30' into phased antenna arrays helps to counteract this attenuation by boosting the gain of the signals in producing signal beam 82. However, signal beam 82 is highly directive and may require a line-of-sight (LOS) between UE device 10 and AP 6. If an external object is present between AP 6 and UE device 10, the external object may block the LOS between UE device 10 and access point 6, which can disrupt wireless communications using THF signals 32. If desired, a reconfigurable intelligent surface (RIS) may be used to allow UE device 10 and AP 6 to continue to communicate using THF signals 32 even when an external object blocks the LOS between UE device 10 and AP 6.

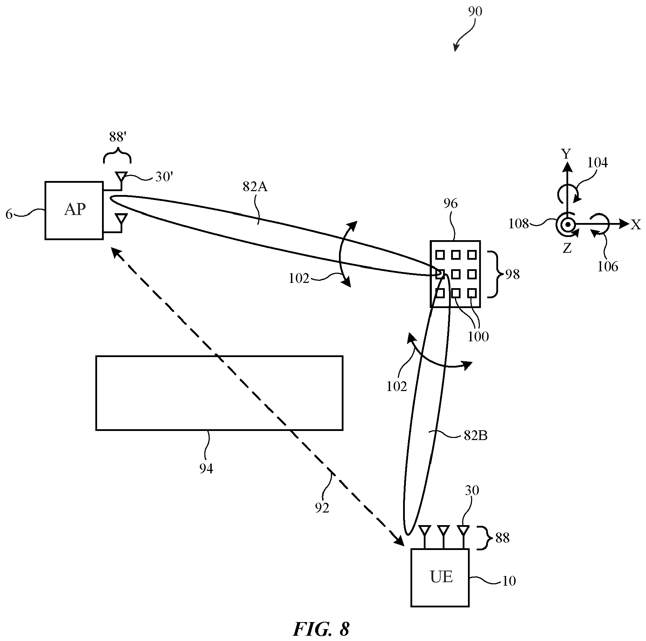

FIG. 8 is a diagram of an exemplary environment 90 in which a reconfigurable intelligent surface (RIS) is used to allow UE device 10 and AP 6 to continue to communicate using THF signals 32 despite the presence of an external object in the LOS between UE device 10 and AP 6. As shown in FIG. 8, AP 6 may be at a first location in environment 90 and UE device 10 may be at a second location in environment 90. AP 6 may be separated from UE device 10 by LOS path 92. In some circumstances, an external object such as object 94 may block LOS path 92. Object 94 may be, for example, furniture, a body or body part, an animal, a wall or corner of a room, a cubicle wall, a vehicle, a landscape feature, or other obstacles or objects that may block LOS path 92.

In the absence of external object 94, AP 6 may form a corresponding signal beam (e.g., signal beam 82 of FIG. 7) oriented in the direction of UE device 10 and UE device 10 may form a corresponding signal beam (e.g., signal beam 82 of FIG. 7) oriented in the direction of AP 6. UE device 10 and AP 6 can then convey THF signals 32 over their respective signal beams and LOS path 92. However, the presence of external object 94 prevents THF signals 32 from being conveyed over LOS path 92. RIS 96 may be placed or disposed within environment 90 to allow UE device 10 and AP 6 to exchange THF signals 32 despite the presence of external object 94 within LOS path 92. RIS 96 may also be used to reflect signals between UE device 10 and AP 6 when reflection via RIS 96 offers superior radio-frequency propagation conditions to LOS path 92 (e.g., when the LOS between AP 6 and RIS 96 and the LOS between RIS 96 and UE device 10 collectively exhibit better radio-frequency channel conditions than LOS path 92).

RIS 96 (sometimes referred to as intelligent reflective/reconfigurable surface (IRS) 96, reflective surface 96, reconfigurable surface 96, or electronic device 96) is an electronic device that includes a two-dimensional surface of engineered material having reconfigurable properties for performing communications between AP 6 and UE device 10. RIS 96 may include an array 98 of antenna elements 100 on an underlying substrate. The substrate may be a rigid or flexible printed circuit board, a package, a plastic substrate, meta-material, or any other desired substrate. The substrate may be planar or may be curved in one or more dimensions. If desired, the substrate and antenna elements 100 may be enclosed within a housing. The housing may be formed from materials that are transparent to THF signals 32. If desired, RIS 96 may be disposed (e.g., layered) onto an underlying electronic device. RIS 96 may also be provided with mounting structures (e.g., adhesive, brackets, a frame, screws, pins, clips, etc.) that can be used to affix or attach RIS 96 to an underlying structure such as another electronic device, a wall, the ceiling, the floor, furniture, etc. Disposing RIS 96 on a ceiling, wall, column, pillar, or at or adjacent to the corner of a room (e.g., a corner where two walls intersect, where a wall intersects with the floor or ceiling, where two walls and the floor intersect, or where two walls and the ceiling intersect), as examples, may be particularly helpful in allowing RIS 96 to reflect THF signals between AP 6 and UE 10 around various objects 94 that may be present within the room.

RIS 96 may be a powered device that includes control circuitry (e.g., one or more processors) that help to control the operation of array 98 (e.g., control circuitry such as control circuitry 14 of FIG. 1). When electro-magnetic (EM) energy waves (e.g., waves of THF signals 32) are incident on RIS 96, the wave is effectively reflected by each antenna element 100 in array 98 (e.g., via re-radiation by each antenna element 100 with a respective phase and amplitude response). The control circuitry on RIS 96 may determine the response on a per-element or per-group-of-elements basis (e.g., where each antenna element has a respective programmed phase and amplitude response or the antenna elements in different sets/groups of antenna elements are each programmed to share the same respective phase and amplitude response across the set/group but with different phase and amplitude responses between sets/groups). The scattering, absorption, reflection, and diffraction properties of the entire RIS can therefore be changed over time and controlled (e.g., by software running on the RIS or other devices communicably coupled to the RIS such as AP 6 or UE device 10). One way of achieving the per-element phase and amplitude response of antenna elements 100 is by adjusting the impedance of antenna elements 100, thereby controlling the complex reflection coefficient that determines the change in amplitude and phase of the re-radiated signal. The control circuitry on RIS 96 may configure antenna elements 100 to exhibit impedances (or other properties) that serve to reflect THF signals 32 incident from particular incident angles onto particular output angles. The antenna elements (e.g., the antenna impedances) may be adjusted to change the angle with which incident THF signals 32 are reflected off of RIS 96.

For example, the control circuitry on RIS 96 may configure array 98 to reflect THF signals 32 transmitted by AP 6 towards UE device 10 and to reflect THF signals 32 transmitted by UE device 10 towards AP 6. This may effectively cause the signal beam 82 between AP 6 and UE device 10 to form a reflected signal beam having a first portion 82A from AP 6 to RIS 96 and a second portion 82B from RIS 96 to UE device 10. To convey THF signals 32 over the reflected signal beam, phased antenna array 88' on AP 6 may perform beamforming (e.g., by configuring its antennas 30' with respective beamforming coefficients as given by an AP codebook at AP 6) to form an AP signal beam with a beam pointing direction oriented towards RIS 96 (e.g., as shown by portion 82A of the signal beam) and phased antenna array 88 on UE device 10 may perform beamforming (e.g., by configuring its antennas 30 with respective beamforming coefficients as given by a UE codebook at UE device 10) to form a UE signal beam with a beam pointing direction oriented towards RIS 96 (e.g., as shown by portion 82B of the signal beam). At the same, RIS 96 may configure its own antenna elements 100 to perform beamforming with respective beamforming coefficients (e.g., as given by a RIS codebook at RIS 96). The beamforming performed at RIS 96 may include two concurrently active RIS beams (e.g., where each RIS beam is generated using a corresponding set of beamforming coefficients). RIS 96 may form a first active RIS beam (sometimes referred to herein as a RIS-AP beam) that has a beam pointing direction oriented towards AP 6 and may concurrently form a second active RIS beam (sometimes referred to herein as a RIS-UE beam) that has a beam pointing direction oriented towards UE device 10. In this way, when THF signals 32 are incident from AP 6 (e.g., within portion 82A of the signal beam), the antenna elements on RIS 96 may receive the THF signals incident from the direction of AP 6 and may re-radiate (e.g., effectively reflect) the incident THF signals 32 towards the direction of UE device 10 (e.g., within portion 82B of the signal beam). Conversely, when THF signals 32 are incident from UE device 10 (e.g., within portion 82B of the signal beam), the antenna elements on RIS 96 may receive the THF signals incident from the direction of UE device 10 and may re-radiate (e.g., effectively reflect) the incident THF signals 32 towards the direction of AP 6 (e.g., within portion 82A of the signal beam). While referred to herein as "beams," the RIS-UE and RIS-AP beams formed by RIS 96 do not include signals/data that are actively transmitted by RIS 96 but instead correspond to the impedance, phase, and/or magnitude response settings for antenna elements 100 that shape the reflected signal beam of THF signals from a corresponding incident direction/angle onto a corresponding output direction/angle (e.g., the RIS-UE beam may be effectively formed using a first set of beamforming coefficients and the RIS-AP beam may be effectively formed using a second set of beamforming coefficients used to form the RIS-AP beam but are not associated with the active transmission of wireless signals by RIS 96).

The control circuitry on RIS 96 may set and adjust the impedances (or other characteristics) of antenna elements 100 in array 98 to reflect THF signals 32 in desired directions (e.g., using a data transfer RAT associated with communications at the frequencies of THF signals 32). The control circuitry on RIS 96 may also communicate with AP 6 and/or UE device 10 using radio-frequency signals at lower frequencies using a control RAT that is different than the data transfer RAT. The control RAT may be used to help control the operation of array 98 in reflecting THF signals 32. For example, the control link may allow AP 6, UE device 10, and/or RIS 96 to interact with each other before a THz link is established with the data RAT, to set up, establish, and maintain the THz link with the data rat, to enable procedures between AP 6 and UE device 10 such as beam sweeping or beam tracking, etc. RIS 96 may include transceiver circuitry and the control circuitry may include one or more processors that handle communications using the control RAT. One or more antenna elements 100 may be used to convey radio-frequency signals using the control RAT or RIS 96 may include one or more antennas that are separate from array 98 for performing communications using the control RAT.

To minimize the cost, complexity, and power consumption of RIS 96, RIS 96 may include only the components and control circuitry required to control and operate array 98 to reflect THF signals 32. Such components and control circuitry may include components for adjusting the phase and magnitude responses (e.g., impedances) of antenna elements 100 as required to change the direction with which RIS 96 reflects THF signals 32 (e.g., as required to steer the RIS-AP beam and the RIS-UE beam, as shown by arrows 102). The components may include, for example, components that adjust the impedances or other characteristics of antenna elements 100 so that each antenna element exhibits a respective complex reflection coefficient, which determines the phase and amplitude of the reflected (re-radiated) signal produced by each antenna element (e.g., such that the signals reflected across the array constructively and destructively interfere to form a reflected signal beam in a corresponding beam pointing direction). All other components that would otherwise be present in UE device 10 or AP 6 may be omitted from RIS 96 (e.g., other processing circuitry, input/output devices such as a display or user input device, transceiver circuitry for generating and transmitting, receiving, or processing wireless data conveyed using THF signals 32, etc.). In other words, the control circuitry on RIS 96 may adjust the antenna elements 100 in array 98 to shape the electromagnetic waves of THF signals 32 (e.g., reflected/re-radiated THF signals 32) for the data transfer RAT without using antenna elements 100 to perform any data transmission or reception operations and without using antenna elements 100 to perform radio-frequency sensing operations. RIS 96 may also include components for communicating using the control RAT.

As one example, array 98 may be implemented using the components of phased antenna array 88 of FIG. 7. However, since RIS 96 does not actually generate or transmit wireless data using array 98 and the data transfer RAT, antenna elements 100 may be implemented without modulators, without a receiver, without a transmitter, without converter circuitry, without mixer circuitry, and/or without other circuitry involved in the transmission or reception of wireless data. If desired, each antenna element 100 may include a respective varactor diode or other impedance-adjusting device that is coupled to a corresponding antenna resonating element. The varactor diode or other impedance-adjusting device may be adjusted using control signals to adjust the impedance of the antenna element to change the phase/amplitude of the THF signals reflected by the antenna element for performing beamforming (e.g., antenna elements 100 may reflect THF signals 32 without the use of optical local oscillator signals, thereby allowing RIS 96 to also omit the LO light sources 70 and signal path 28 (FIG. 6), which may otherwise be implemented in UE device 10 and/or AP 6, to further reduce cost, complexity, and power consumption).

Consider an example in which each antenna element 100 includes a respective antenna resonating element 36 and UTC PD 42 as in antenna 30 of FIGS. 2-7. In this example, UTC PD 42 need not be supplied with optical local oscillator signals because antenna element 100 is only used for passive signal reflection and not for active signal transmission or reception. Control signals V_{BIAS} may include a bias voltage and/or other control signals that configure UTC PD 42 to exhibit a selected output impedance. UTC PD 42 may also be replaced with a varactor diode or other impedance-adjusting device configured to adjust the output impedance. The selected output impedance may be mismatched with respect to the input impedance of antenna resonating element 36 (e.g., at the frequencies of THF signals 32). This impedance mismatch may cause antenna element 100 to reflect (scatter) incident THF signals 32 as reflected (scattered) THF signals (e.g., with a corresponding complex reflection coefficient).

The selected impedance mismatch may also configure antenna element 100 to impart a selected phase shift and/or carrier frequency shift on the reflected THF signals relative to the incident THF signals 32 (e.g., where the reflected THF signals are phase-shifted with respect to THF signals 32 by the selected phase shift, are frequency-shifted with respect to THF signals 32 by the selected carrier frequency shift, etc.). Additionally or alternatively, the system may be adapted to configure antenna element 100 to impart polarization changes on the reflected THF signals relative to the incident THF signals 32. Control signals V_{BIAS} may change, adjust, or alter the output impedance of UTC PD 42 (or the varactor diode or other impedance-adjusting device) over time to change the amount of mismatch between the output impedance of UTC PD 42 (or the varactor diode or other device) and the input impedance of antenna resonating element 36 to impart the reflected THF signals with different phase shifts and/or carrier frequency shifts. In other words, control circuitry on RIS 96 (e.g., control circuitry with similar components and/or functionality as control circuitry 14 of FIG. 1) may program the phase, frequency, and/or polarization characteristics of the reflected THF signals (e.g., using the control signals V_{BIAS} applied to UTC PD 42, the varactor diode, or other device).

The same impedance mismatch may be applied to all the antenna elements 100 in array 98 or different impedance mismatches may be applied for different antennas elements 100 in array 98 at any given time. Applying different impedance mismatches across array 98 may, for example, allow the control circuitry in RIS 96 to form a RIS-UE beam and a RIS-AP beam that points in one or more desired (selected) beam pointing directions. This example in which control signal V_{BIAS} is used to adjust antenna impedance using UTC PD 42 is merely illustrative. In general, antenna elements 100 may be implemented using any desired antenna architecture (e.g., the antennas need not include photodiodes) and may include any desired structures that are adjusted by control circuitry (e.g., using control signals V_{BIAS} or other control signals) on RIS 96 to impart the THF signals 32 reflected by each antenna element 100 with a different relative phase such that the THF signals reflected by all antenna elements 100 collectively form a reflected signal beam (e.g., a RIS-UE beam or a RIS-AP beam) oriented in a desired (selected) beam pointing direction. Such structures (e.g., impedance-adjusting devices) may include adjustable impedance matching structures or circuitry, varactor diodes, adjustable phase shifters, adjustable amplifiers, optical phase shifters, antenna tuning elements, and/or any other desired structures that may be used to change the amount of impedance mismatch produced by antenna elements 100 at the frequencies of THF signals 32.

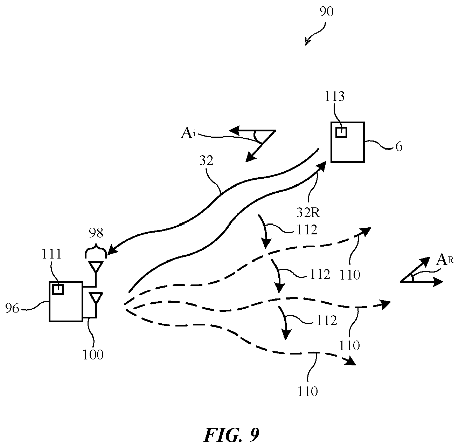

FIG. 9 is a diagram showing how two or more antenna elements 100 on RIS 96 (e.g., array 98) may reflect incident THF signals 32 transmitted by AP 6. As shown in FIG. 9, AP 6 may transmit THF signals 32. THF signals 32 may be incident upon RIS 96 at incident angle Aᵢ. Antenna elements 100 in array 98 may reflect the THF signals 32 at incident angle Aᵢ as reflected signals 32R. Control signals V_{BIAS} may be varied (e.g., thereby varying imparted phase shift) across array 98 to configure array 98 to collectively reflect THF signals 32 from incident angle Aᵢ onto a corresponding output (scattered) angle A_{R} (e.g., as a reflected signal beam with a beam pointing direction in the direction of output angle A_{R}).

Control signals V_{BIAS} may configure output angle A_{R} to be any desired angle within the field of view of RIS 96. For example, output angle A_{R} may be oriented towards AP 6 so AP 6 receives reflected signals 32R. This may allow AP 6 to identify the position and orientation of RIS 96 (e.g., in situations where AP 6 has no *a priori* knowledge of the location and orientation of device RIS 96). If desired, control circuitry on RIS 96 may control output angle A_{R} to point in other directions, as shown by arrows 110. Arrows 110 may be oriented towards UE device 10 (e.g., as a part of signal beam 82B of FIG. 8). If desired, UE device 10 may identify the location and orientation of RIS 96 based on receipt of reflected signals 32R. If desired, the control circuitry on RIS 96 may sweep reflected signals 32R over a number of different output angles A_{R} as a function of time, as shown by arrows 112. This may, for example, help RIS 96 to establish a THF signal relay between UE device 10 and AP 6, to find other UE devices for relaying THF signals, and/or to maintain a THF signal relay between UE device 10 and AP 6 even as UE device 10 and/or object 94 (FIG. 8) move over time. The example of FIG. 9 is merely illustrative. Signals 32 may be reflected in three dimensions. RIS 96 may reflect signals transmitted by UE device 10 towards AP 6 while implementing beam steering.

In practice, AP 6 and RIS 96 are generally stationary within environment 90, whereas UE device 10 and object 94 may move over time. It can be challenging to initiate communications between AP 6 and UE device 10 via RIS 96 in this type of environment, particularly because AP 6 needs to know the relative position and orientation of RIS 96 to correctly form its AP signal beam, UE device 10 needs to know the relative position and orientation of RIS 96 to correctly form its UE signal beam, and AP 6 or UE device 10 needs to know the relative position and orientation of RIS 96 to control RIS 96 (e.g., via the control RAT) to correctly form its RIS-AP beam and RIS-UE beam. However, AP 6 and UE device 10 have no *a priori* knowledge of the relative position and orientation of RIS 96 prior to beginning THF communications via RIS 96.

The relative position and orientation of RIS 96 may, for example, be defined by six degrees of freedom: three translational positions along the X, Y, and Z axes of FIG. 8 and three rotational positions such as tilt (pitch), rotation (roll), and yaw, as shown by arrows 104, 106, and 108 of FIG. 8). In some scenarios, RIS 96 may include sensors (e.g., accelerometers, gyroscopes, compasses, image sensors, light sensors, radar sensors, acoustic sensors, etc.) that identify the relative position and orientation of RIS 96. In these scenarios, RIS 96 may use the control RAT to inform AP 6 and/or UE device 10 of the relative position and orientation. However, including such sensors on RIS 96 would undesirably increase the cost, complexity, and power consumption of RIS 96. It would therefore be desirable to be able to establish and maintain THF communications between UE device 10 and AP 6 via RIS 96 without the use of such sensors on RIS 96.

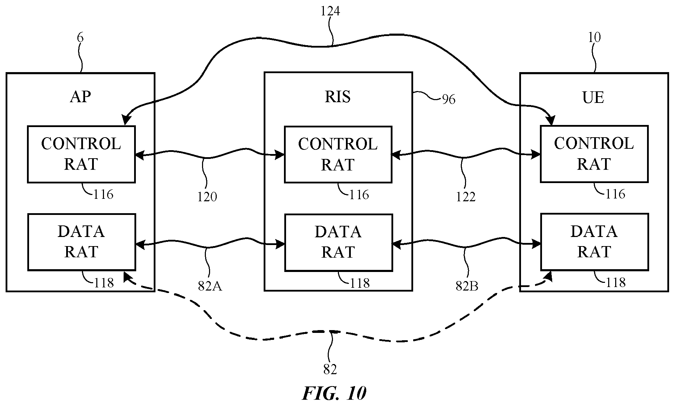

FIG. 10 is a diagram showing how AP 6, RIS 96, and UE device 10 may communicate using both a control RAT and a data transfer RAT for establishing and maintaining communications between AP 6 and UE device 10 via RIS 96. As shown in FIG. 10, AP 6, RIS 96, and UE device 10 may each include wireless circuitry that operates according to a data transfer RAT 118 (sometimes referred to herein as data RAT 118) and a control RAT 116. Data transfer RAT 118 may be a sub-THz communications RAT such as a 6G RAT that performs wireless communications at the frequencies of THF signals 32. Control RAT 116 may be associated with wireless communications that consume much fewer resources and are less expensive to implement than the communications of data transfer RAT 118. For example, control RAT 116 may be Wi-Fi, Bluetooth, a cellular telephone RAT such as a 3G, 4G, or 5G NR FR1 RAT, etc. As another example control RAT 116 may be an infrared communications RAT (e.g., where an infrared remote control or infrared emitters and sensors use infrared light to convey signals for the control RAT between UE device 10, AP 6, and/or RIS 96).

AP 6 and RIS 96 may use control RAT 116 to convey radio-frequency signals 120 between AP 6 and RIS 96. UE device 10 and RIS 96 may use control RAT 116 to convey radio-frequency signals 122 between UE device 10 and RIS 96. UE device 10, AP 6, and RIS 96 may use data transfer RAT 118 to convey THF signals 32 within the reflected signal beam (e.g., within portion 82A between AP 6 and RIS 96 and portion 82B between RIS 96 and UE device 10)The RIS-UE beam and the RIS-AP beam formed by RIS 96 may operate on THF signals transmitted using data transfer RAT 118 to reflect the THF signals between AP 6 and UE device 10. AP 6 may use radio-frequency signals 120 and control RAT 116 and/or UE device 10 may use radio-frequency signals 122 and control RAT 116 to discover RIS 96 and to configure antenna elements 100 to establish and maintain the relay of THF signals 32 performed by antenna elements 100 using data transfer RAT 118.

If desired, AP 6 and UE device 10 may also use control RAT 116 to convey radio-frequency signals 124 directly with each other (e.g., since the control RAT operates at lower frequencies that do not require line-of-sight). UE device 10 and AP 6 may use radio-frequency signals 124 to help establish and maintain THF communications (communications using data transfer RAT 118) between UE device 10 and AP 6 via RIS 96. AP 6 and UE device 10 may also use data transfer RAT 118 to convey THF signals 32 within an uninterrupted signal beam 82 (e.g., a signal beam that does not reflect off RIS 96) when LOS path 92 (FIG. 8) is available.

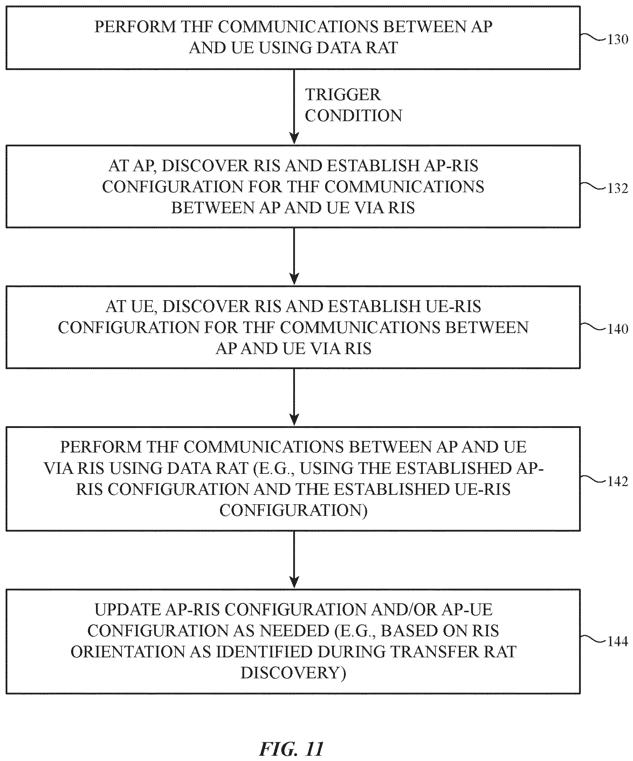

FIG. 11 is a flow chart of illustrative operations involved in performing THF communications between AP 6 and UE device 10 via RIS 96. At operation 130, AP 6 and UE device 10 may perform THF communications using data transfer RAT 118. For example, AP 6 and UE device 10 may use signal beam 82 to convey THF signals 32 over LOS path 92 (FIG. 8). Signal beam 82 may be supported by an AP beam formed by phased antenna array 88' on AP 6 and a corresponding UE beam formed by phased antenna array 88 on UE device 10.

Upon the occurrence or detection of a trigger condition indicating that THF communications should be relayed via RIS 96, processing may proceed to operation 132. The trigger condition may occur when object 94 blocks LOS path 92, when UE device 10 and/or AP 6 measures wireless performance metric data that is outside a range of acceptable wireless performance metric data values, when THF signals 32 are otherwise blocked or not received at UE device 10 and/or AP 6, periodically, at a specified time, upon receipt of a user input at UE device 10 or AP 6, upon power on of RIS 96, upon gathered sensor data falling within a predetermined range of values, or any other desired trigger condition. Alternatively, operation 130 may be omitted.

At operation 132, AP 6 may discover RIS 96 and may establish a configuration for RIS 96 and AP 6 to communicate using data transfer RAT 118 by conveying THF signals 32 between AP 6 and UE device 10 (sometimes referred to herein as an AP-RIS configuration). In general, phased antenna array 88' may be able to form a set of different AP beams, where each AP beam in the set is oriented in a different respective beam pointing direction. Each AP beam may be defined by a corresponding AP beam index m_{AP}. AP 6 may have a codebook 113 (FIG. 9) that identifies the settings (e.g., beamforming coefficients, phase settings, impedance settings, magnitude settings, etc.) for each antenna 30' in phased antenna array 88' corresponding to each AP beam index m_{AP} (e.g., codebook 113 may store the settings for each antenna 30' to form each AP beam in the set of formable AP beams). Codebook 113 may be hardcoded and/or soft-coded on AP 6 (e.g., codebook 113 may include a table, database, register, or other data object stored on AP 6).

In general, array 98 on RIS 96 may be able to form a set of different RIS-AP beams each oriented in a different respective direction and may be able to form a set of different RIS-UE beams each oriented in a different respective direction. RIS 96 may, for example, concurrently form one of the RIS-AP signal beams in the set of RIS-AP signal beams and one of the RIS-UE signal beams in the set of RIS-UE signal beams. The signal beams formed by RIS 96 at any given instant may sometimes be referred to herein as active beams. The each RIS-UE beam in the set of RIS-UE beams formable by RIS 96 may be defined or labeled by a corresponding RIS-UE beam index. Similarly, each RIS-AP beam in the set of RIS-AP beams may be defined or labeled by a corresponding RIS-AP beam index. The settings for antenna elements 98 that are used to form the RIS-UE and RIS-AP beams (e.g., beamforming coefficients, phase settings, magnitude settings, impedance settings, etc.) and the corresponding RIS-UE and RIS-AP beam indices may be stored in a codebook 111 on RIS 96 (FIG. 9). The RIS-AP beam indices and the RIS-UE beam indices may each be labeled with a respective RIS beam index mms and there may be M_{RIS} total RIS beam indices in codebook 111 (e.g., where M_{RIS} includes both the RIS-AP beam indices and the RIS-UE beam indices). Codebook 111 may be hardcoded and/or soft-coded on RIS 96 (e.g., codebook 111 may include a table, database, register, or other data object stored on RIS 96).

The AP-RIS configuration may include an optimal AP beam that is oriented towards RIS 96 (e.g., the corresponding AP beam index m_{AP} and/or settings for phased antenna array 88'). Establishing the AP-RIS configuration may involve identifying/finding the optimal AP beam and a RIS-AP beam that points back towards AP 6. Once the AP-RIS configuration has been established, AP 6 has knowledge of the relative position and orientation of RIS 96 with respect to AP 6. AP 6 can then use this information to know how to direct the AP beam and how to control RIS 96 to reflect THF signals at different angles between AP 6 and UE device 10 via RIS 96.

As a part of discovering RIS 96 and establishing the AP-RIS configuration, AP 6 may first perform a control RAT discovery of RIS 96. The control RAT discovery may involve using control RAT 116 and radio-frequency signals 120 to identify the presence of RIS 96 to AP 6 and optionally one or more characteristics of RIS 96 for use in performing subsequent THF communications using data transfer RAT 118. Once RIS 96 has been discovered using control RAT 116, AP 6 may then perform a data transfer RAT discovery of RIS 96. The data transfer RAT discovery may involve using data transfer RAT 118 and/or control RAT 116 to set up and establish the AP-RIS configuration (e.g., to identify the optimal AP beam and the RIS-AP beam that points towards AP 6). As AP 6 and RIS 96 are generally fixed in place and do not move with respect to each other, it is assumed that the AP-RIS configuration is fixed upon discovery by AP 6. As such, the RIS-AP beam and the AP beam are assumed to remain fixed during the remaining operations of FIG. 11 (e.g., the remaining operations of FIG. 11 may be used to identify and update the RIS-UE beam and the UE beam as the UE moves over time). This is merely illustrative and, if AP 6 or RIS 96 moves over time, operation 132 may be repeated (e.g., processing may loop back to operation 132 of FIG. 11 as needed).

At operation 140, UE device 10 may discover RIS 96 and may establish a configuration for RIS 96 and UE device 10 to communicate using data transfer RAT 118 by conveying THF signals 32 between AP 6 and UE device 10 (sometimes referred to herein as a UE-RIS configuration). Phased antenna array 88 on UE device 10 may form a corresponding UE beam. In general, phased antenna array 88 may be able to form a set of different UE beams, where each UE beam in the set is oriented in a different respective beam pointing direction. Each UE beam may be defined by a corresponding UE beam index m_{UE}. UE device 10 may have a corresponding codebook that identifies the settings (e.g., phase settings, beamforming coefficients, impedance settings, magnitude settings, etc.) for each antenna 30 in phased antenna array 88 corresponding to each UE beam index m_{UE} (e.g., the codebook may store the settings for each antenna 30 to form each UE beam in the set of formable UE beams). The codebook may be hardcoded and/or soft-coded on UE device 10 (e.g., the codebook may include a table, database, register, or other data object stored on UE device 10).

The UE-RIS configuration may include an optimal UE beam that is oriented towards RIS 96 and an optimal RIS-UE beam that is oriented back towards UE device 10. Establishing the UE -RIS configuration may involve identifying/finding the optimal UE beam and the optimal RIS-UE beam. Once the UE-RIS configuration has been established, UE device 10 has knowledge of the relative position and orientation of RIS 96 with respect to UE device 10. UE device 10 can then use this information to know how to direct the UE signal beam and how to control RIS 96 to reflect THF signals between AP 6 and UE device 10 via RIS 96. Additionally or alternatively, AP 6 may inform UE device 10 (e.g., via control RAT 116 and radio-frequency signals 124 of FIG. 10) of the presence of RIS 96, its capabilities, its formable signal beams, its position and orientation, the optimal AP signal beam, and/or the optimal RIS-AP and RIS-UE signal beams.

At operation 142, AP 6 and UE device 10 may perform THF communications via RIS 96 using data transfer RAT 118. The AP-RIS configuration and the UE-RIS configuration as discovered and established while processing operations 132 and 140 may configure RIS 96 to relay THF signals 32 between UE device 10 and AP 6. For example, AP 6 may transmit THF signals 32 within its AP beam and RIS 96 may reflect THF signals 32 incident in the direction of its RIS-AP beam onto the direction of its RIS-UE beam, which is oriented towards UE device 10. Conversely, UE device 10 may transmit THF signals 32 within its UE beam and RIS 96 may receive THF signals 32 incident in the direction of its RIS-UE beam onto the direction of its RIS-AP beam oriented towards AP 6. This may allow AP 6 and UE device 10 to perform very high data rate communications using THF signals despite not having LOS path 92, while minimizing the cost, complexity, and power consumption of RIS 96.

At operation 144, AP 6 and/or UE device 10 may update the AP-RIS configuration and/or the UE-RIS configuration as needed. This may, for example, involve updating the AP beam (e.g., selecting a new AP signal beam oriented in a new beam pointing direction), the RIS-UE beam and/or the RIS-AP beam (e.g., selecting a new setting for the phases, magnitudes, beamforming coefficients, and/or impedances of the antenna elements 100 in array 98), and/or the UE beam (e.g., selecting a new UE signal beam oriented in a new beam pointing direction) to account for movement of UE device 10 (e.g., to allow the signal beams to continue to track UE device 10 via RIS 96 as the UE device moves over time) or to otherwise optimize wireless performance. If desired, the beams may be updated based on the position and orientation of RIS 96 relative to AP 6 and/or relative to UE device 10 as discovered while processing operation 132 and/or operation 140. For example, if UE device 10 changes its location by a known or detected amount, the position and orientation of RIS 96 can be used to identify a new AP beam, RIS-UE beam, RIS-AP beam, and/or UE beam that would allow RIS 96 to reflect THF signals 32 between AP 6 and UE device 10 at the new location. If desired, AP 6 and/or UE device 10 may program one or more new codebook entries for the codebook on RIS 96 (e.g., using the control RAT). Additionally or alternatively, processing may loop back to operation 132 to re-discover RIS 96 and/or may loop back to operation 130 (e.g., when object 94 is no longer blocking LOS path 92 of FIG. 8).

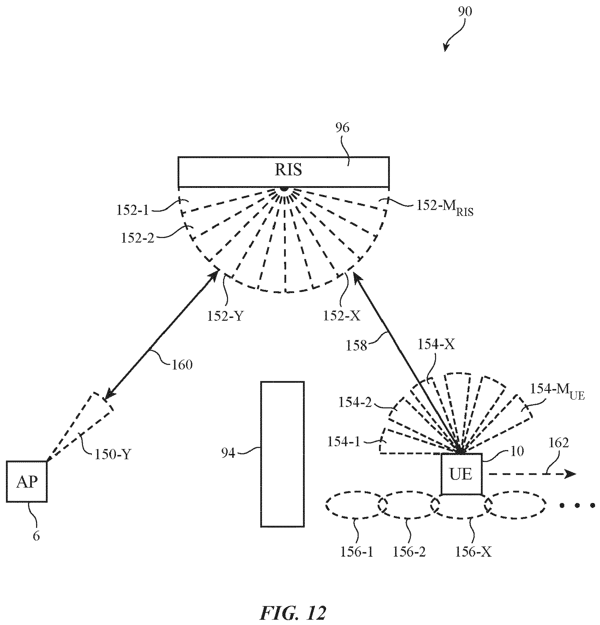

FIG. 12 is a side view showing how RIS 96 may use different RIS beams to maintain communication between AP 6 and UE device 10 as UE device 10 moves over time. As shown in FIG. 12, AP 6 and RIS 96 may be disposed at fixed locations within environment 90. Object 94 may block the LOS path between AP 6 and UE device 10. RIS 96 may have a set of RIS beams 152. RIS beams 152 may include both RIS-AP beams and RIS-UE beams (e.g., RIS 96 may concurrently form at least two RIS beams 152 at once, at least one RIS-AP beam and at least one RIS-UE beam). The beamforming coefficients, impedance settings, phase settings, and/or magnitude settings to be used by each of the antenna elements in RIS 96 to form different RIS beams 152 may be stored in a codebook on RIS 96. RIS 96 may have M_{RIS} total RIS beams 152 (e.g., a first RIS beam 152-1, a second RIS beam 152-2, an M_{RIS}^{th} RIS beam 152-M_{RIS}, etc.). The M_{RIS} total RIS beams 152 may include both RIS-UE and RIS-AP beams. AP 6 may have an AP beam 150-Y that points towards RIS 96 (e.g., as found while processing operation 132 of FIG. 11). RIS 96 may have a corresponding RIS-AP beam 152-Y that points towards AP 6. Assuming that RIS 96 and AP 6 remain fixed within environment 90 over time, RIS 96 may use RIS-AP beam 152-Y to reflect THF signals to/from AP 6 while the RIS-UE beam is adjusted to account for the mobility of UE device 10.

UE device 10 may have a set of UE beams 154. The phase and/or magnitude settings (e.g., beamforming coefficients) for each antenna 30 in phased antenna array 88 on UE device 10 (FIG. 8) may be stored in a codebook on UE device 10. UE device 10 may have M_{UE} total UE beams 154 (e.g., a first UE beam 154-1, a second UE beam 154-2, an M_{UE}^{th} UE beam 154-M_{UE}, etc.). Each RIS-UE beam in RIS beams 152 may overlap a respective area 156 within environment 90 (e.g., a respective area 156-1, 156-2, 156-X, etc.). Areas 156 may sometimes be referred to herein as spot beams or beam footprints 156. At a given point in time, UE device 10 may be located within the beam footprint 156-X of RIS-UE beam 152-X in environment 90. RIS-UE beam 152-X points towards UE device 10 within beam footprint 156-X (e.g., beam footprint 156-X may be defined by the width of RIS-UE beam 152-X). While within beam footprint 156-X, UE device 10 may have a corresponding UE beam 154-X that points towards RIS 96. RIS-UE beam 152-X and/or UE beam 154-X may be found while processing operation 142 of FIG. 11, for example. RIS-UE beam 152-X may be identified by a corresponding beam index mms-X within the codebook of RIS 96 (e.g., a RIS-UE beam index from the M_{RIS} total beam indices in the codebook of RIS 96). Similarly, UE beam 154-X may be identified by a corresponding index m_{UE}-X within the codebook of UE device 10. When the antenna elements on RIS 96 are programed to concurrently exhibit responses that form RIS-UE beam 152-X and that form RIS-AP beam 152-Y, THF signals transmitted by AP 6 and incident within RIS-AP beam 152-Y (as shown by arrow 160) may be reflected by RIS 96 towards UE device 10 within RIS-UE beam 152-X (as shown by arrow 158). Conversely, THF signals transmitted by UE device 10 and incident within RIS-UE beam 152-X may be reflected by RIS 96 towards AP 6 within RIS-AP beam 152-Y.

In practice, RIS beams 152 are very narrow (e.g., having 3 dB beam widths around 1 degree), which causes each beam footprint 156 to be relatively small (e.g., depending on the distance between RIS 96 and UE device 10). At the same time, UE device 10 is mobile and often moves or rotates while operated by a user. Given the narrow width of beam footprints 156, even a slow-moving user can cause UE device 10 to quickly move out of beam footprint 156-X (e.g., as quickly as within 10-100 ms). The active RIS-UE beam and/or UE beam 154 (sometimes referred to herein as serving beams or serving signal beams) therefore need to be updated frequently (e.g., every 10-100 ms). For example, when UE device 10 rotates or moves in the direction of arrow 162, the active RIS-UE beam and the active UE beam 154 may need to be updated for RIS 96 to continue to reflect THF signals between AP 6 and UE device 10.

In some scenarios, when UE device 10 moves out of the active beam footprint 156-X, the control RAT is used to control RIS 96 to scan over all of the RIS-UE beams in the M_{RIS} total beams identified by the codebook for RIS 96 and to control UE device 10 to scan over all M_{UE} of its UE beams 154 until a RIS-UE beam that points towards UE device 10 and a UE beam 154 that points towards RIS 96 are found. However, the number of RIS-UE beams in the M_{RIS} total beams for RIS 96 and M_{UE} are typically very large (e.g., on the order of tens of thousands). As such, performing a full beam scan to account for the mobility of UE device 10 can consume an excessive amount of time, introducing excessive latency and disruption to THF communications between AP 6 and UE device 10 via RIS 96. In addition, control and reconfiguration latency from RIS 96 can further impact communications, particularly given the high number of antenna elements on RIS 96. Further, spatial signal processing to determine relative spatial orientation (e.g., the MUSIC algorithm) may not be possible due to analog-only beamforming on UE device 10 and the absence of signal processing capability on RIS 96.

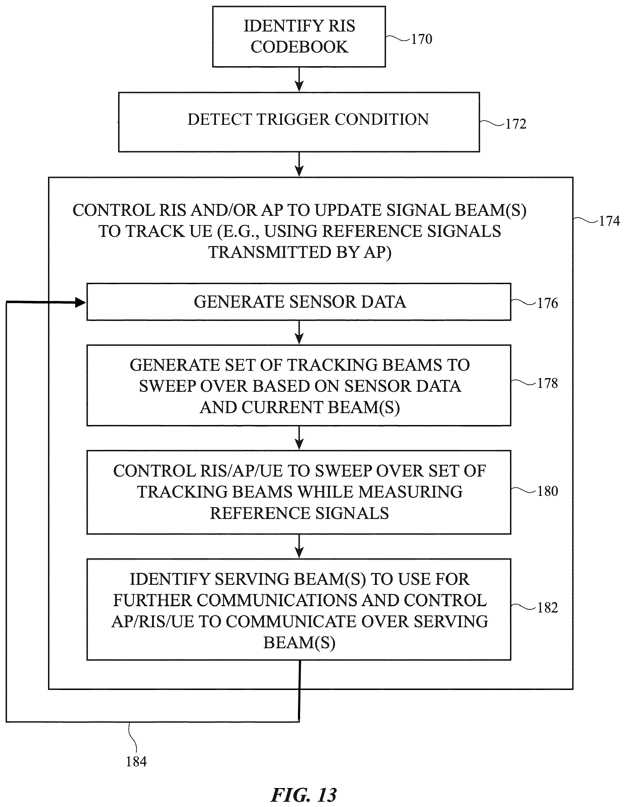

To mitigate these mobility issues, UE device 10 may perform intelligent beam tracking to control RIS 96, UE device 10, and/or AP 6 to update active (serving) signal beams in significantly less time than performing full beam sweeps. FIG. 13 is a flow chart of illustrative operations that may be performed by UE device 10 to perform intelligent beam tracking. The operations of FIG. 13 may be performed while processing operations 142 and/or 144 of FIG. 11, for example.

At operation 170, UE device 10 may identify (e.g., receive) the codebook of RIS 96. UE device 10 may receive, retrieve, or gather information from, about, or identifying the codebook of RIS 96 from RIS 96 and/or from AP 6 using the control RAT and/or the data transfer RAT, from a software update installed on UE device 10, the information may be preloaded or stored on UE device 10, UE device 10 may download the information from the cloud or the Internet, etc. UE device 10 may therefore have knowledge of the M_{RIS} different RIS beams 152 that are formable by RIS 96 (e.g., RIS-UE beams and RIS-AP beams). This may include, for example, information about the beam pointing direction of each RIS beam, the phase, magnitude, and/or impedance information that configure RIS 96 to form each RIS beam, information about the relative position of each RIS beam (e.g., which RIS beams are adjacent to each other), etc.

At operation 172, UE device 10 may detect the occurrence of a trigger condition. The trigger condition may be, for example, the expiration of a periodic timer (e.g., UE device 10 may initiate the subsequent beam sweeping procedure periodically after a predetermined time period has elapsed, on a configurable interval scheduled between AP 6 and UE device 10, etc.). The trigger condition may be the receipt of a user input to UE device 10 or may occur when wireless performance metric data gathered by UE device 10 falls outside of a range of acceptable values or when sensor data gathered by one or more sensors on the UE device indicate that the UE devices has moved or rotated beyond a threshold amount (e.g., UE device 10 may initiate the subsequent beam sweeping procedure on-demand).

At operation 174, UE device 10 may control RIS 96, AP 6, and/or its own phased antenna array 88 to update the active RIS beams 152 (e.g., the active RIS-UE beam and/or RIS-AP beam), UE beam 154, and/or AP beam 150 to track UE device 10 (e.g., to sweep over signal beams until suitable signal beams for maintaining communication between AP 6 and UE device 10 have been found despite any potential rotation or movement of UE device 10 since before the beam sweeps were initiated).

For example, AP device 6 may transmit reference signals to RIS 96. RIS 96 may reflect the reference signals incident within its active RIS-AP beam onto its active RIS-UE beam and towards UE device 10. At operation 176, one or more sensors on UE device 10 may generate sensor data. The sensor data may be motion sensor data generated by a motion sensor on UE device 10 (e.g., inertial measurement unit sensor data, orientation sensor data, compass data, gyroscope data, accelerometer data, etc.), light sensor data (e.g., infrared and/or ambient light sensor data), image sensor data (e.g., camera data, light detection and ranging (lidar) data, etc.), proximity sensor data, touch sensor data, radio-frequency sensor data (e.g., RADAR data or other spatial ranging sensor data, UWB angle-of-arrival and/or time-of-flight data, wireless performance metric data characterizing the radio-frequency performance of one or more receivers and/or transmitters in UE device 10 such as wireless performance metric data characterizing receipt of the reference signals), and/or any other desired sensor data.

At operation 178, control circuitry 14 on UE device 10 may generate (e.g., select, compute, calculate, identify, produce, etc.) a set of tracking beams based on the sensor data and/or the current UE beam 154, RIS beams 152 (e.g., the current RIS-UE beam and/or RIS-AP beam), and/or AP beam 150. The set of tracking beams may include a set of RIS beams 152 (e.g., a set of RIS-UE beams and/or a set of RIS-AP beams), a set of UE beams 154, and/or a set of AP beams 150. The tracking beams are signal beams over which RIS 96, UE device 10, and/or AP 6 will sweep to maintain THF communications via RIS 96 despite the movement/rotation of UE device 10. Each signal beam (e.g., RIS-UE beam, RIS-AP beam, AP beam, and UE beam) in the set of tracking beams may therefore sometimes be referred to herein as a tracking beam (e.g., RIS-UE tracking beams, RIS-AP tracking beams, AP tracking beams, and UE tracking beams). Under the assumption that AP 6 and RIS 96 are fixed in place, the set of tracking beams may only include a set of RIS-UE beams and a set of UE beams (e.g., without including any AP beams or RIS-AP beams, which are presumed to be fixed at AP beam 150-Y and RIS-AP beam 152-Y of FIG. 12).

The set of RIS-UE beams 152 in the set of tracking beams may be a subset of the total number of RIS-UE beams formable by RIS 96 (e.g., where the total number of formable RIS-UE beams is itself a subset of the M_{RIS} total RIS beams 152 formable by RIS 96 and identified by the codebook for RIS 96). The set of UE beams 154 in the set of tracking beams may be a subset of the M_{UE} total UE beams 154 formable by UE device 10. As the set tracking beams only include subsets of the total RIS-UE beams 152 formable by RIS 96 and the total UE beams 154 formable by UE device 10, sweeping over the set of tracking beams rather than performing a full sweep over all signal beams formable by RIS 96 and UE device 10 allows THF communications to be maintained with minimal latency and disruption. UE device 10 may use the sensor data and/or information about the current signal beam(s) to identify which signal beams are included in the set of tracking beams (e.g., RIS-UE signal beams that are likely to overlap UE device 10 given its rotation/motion).

At operation 180, UE device 10 may use the control RAT to control (program) RIS 96 to sweep over the RIS-UE beams 152 included in the set of tracking beams. UE device 10 may additionally or alternatively use control signals to control (program) its phased antenna array 88 to sweep over the UE beams 154 included in the set of tracking beams. AP 6 may continue to transmit reference signals during each of these sweeps.

At operation 182, UE device 10 may identify (e.g., generate, produce, select, etc.) serving beams from the set of tracking beams to use for subsequent THF communications. The serving beams may include a RIS-UE signal beam 152 and a UE signal beam 154that allow RIS 96 to successfully relay THF signals between AP 6 and UE device 10 given the rotation/motion of UE device 10. UE device 10 may gather sensor data during the sweep(s) performed at operation 180 to identify the serving beams. For example, UE device 10 may gather wireless performance metric information (e.g., received signal strength data, signal-to-noise ratio data, error rate data such as bit error rate (BER) data, power level data such as reference symbol received power (RSRP) data, etc.) during the sweep(s) over the set of tracking beams. UE device 10 may identify (select) the tracking beam(s) from the sweep(s) that produced peak wireless performance metric information as the serving beam(s) (e.g., because peak wireless performance metric information is indicative of a RIS-UE beam 152 that overlaps the new location/orientation of UE device 10 and a UE beam 154 that points towards RIS 96 at the new location/orientation of UE device 10). Once the serving beam(s) have been found, the serving beam(s) may be used to convey THF signals between AP 6 and UE device 10 via RIS 96 until the signal beam(s) need to be updated. Processing may therefore loop back to operation 176 via path 184.

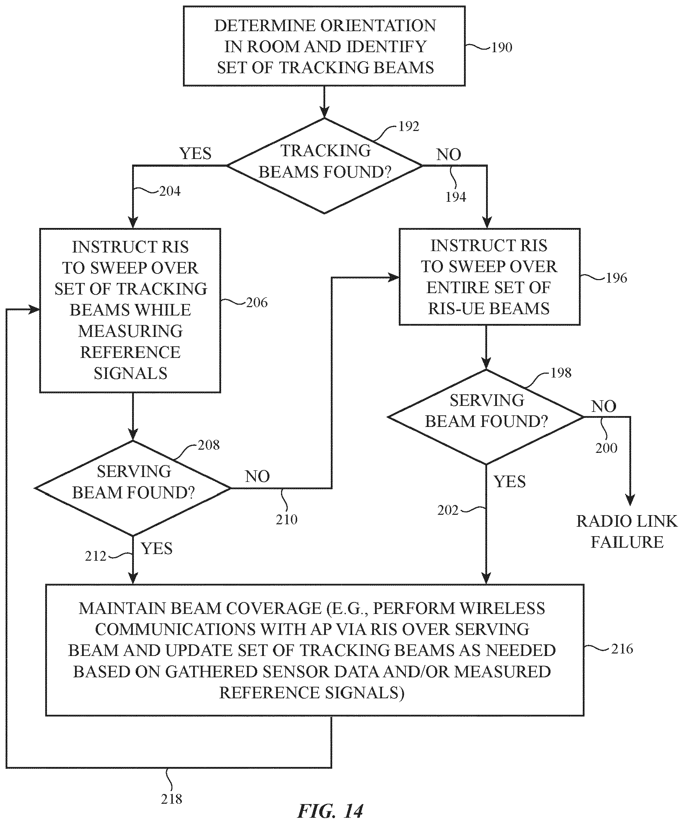

FIG. 14 is a flow chart of illustrative operations that may be performed by UE device 10 in controlling RIS 96 to update signal beams while tracking UE device 10. The operations of FIG. 14 may, for example, be performed while processing the operations of FIG. 13.

At operation 190, UE device 10 may use one or more sensors to determine (e.g., detect, identify, compute, etc.) the orientation and position of UE device 10 (e.g., while processing operation 176 of FIG. 13). UE device 10 may also perform operation 170 of FIG. 13 while processing operation 190 (e.g., to find RIS 96 via the control RAT, to receive configuration information such as information identifying the codebook of the RIS, etc.). Operation 190 may, for example, be performed upon activation or power-up of UE device 10. While processing operation 190, UE device 10 may also perform a first beam sweep (e.g., without tracking) and, if desired, may restrict the beams used in the first beam sweep instead of performing a full search if UE device 10 already has awareness of its location relative to RIS 96. UE device 10 may use the sensor data (e.g., the detected orientation and position of UE device 10) to identify a set of tracking beams (e.g., while processing operation 178 of FIG. 13). However, in practice, given time constraints, the degree to which UE device 10 has moved/rotated, and the presence of other intervening objects between UE device 10 and RIS 96, UE device 10 may not always be able to identify signal beams for inclusion in the set of tracking beams.

At operation 192, control circuitry 14 on UE device 10 may determine whether any tracking beams were found (e.g., whether the set of tracking beams has been populated). If no tracking beams were found processing may proceed to operation 196 via path 194. At operation 196, UE device 10 may instruct RIS 96 (e.g., via the control RAT) to sweep over its entire set of RIS-UE beams 152. In other words, RIS 96 may sacrifice time savings to perform a full sweep over its RIS-UE beams 152 until a suitable serving beam is found that is oriented towards UE device 10. Processing may then proceed to operation 198.

At operation 198, UE device 10 may determine whether a serving beam was found while RIS 96 swept over all of RIS-UE beams 152. UE device 10 may, for example, gather wireless performance metric data while RIS 96 sweeps over RIS-UE beams 152. UE device 10 may identify the RIS-UE beam 152 used while UE device 10 gathered wireless performance metric data (e.g., from reference signals transmitted by AP 6) that exceeds a threshold value as the serving beam (e.g., a RIS-UE beam oriented towards UE device 10 at its new position/orientation). If no serving beam is found, this may be indicative of radio link failure (path 200). If a serving beam is found, processing may proceed to operation 216 via path 202.

If tracking beams were found, processing may proceed from operation 192 to operation 206 via path 204. At operation 206, UE device 10 may instruct RIS 96 (e.g., using the control RAT) to sweep over the RIS-UE beams 152 in the set of tracking beams. The number of RIS-UE beams 152 in the set of tracking beams is smaller than the full set of RIS-UE beams formable by RIS 96. As such, sweeping over the set of tracking beams at operation 206 is significantly faster than sweeping over all of the formable RIS-UE beams (e.g., as performed at operation 196).

At operation 198, UE device 10 may determine whether a serving beam was found while RIS 96 swept over the RIS-UE beams 152 in the set of tracking beams. UE device 10 may, for example, gather wireless performance metric data (e.g., from reference signals transmitted by AP 6) while RIS 96 sweeps over the RIS-UE beams 152 in the set of tracking beams. UE device 10 may identify the RIS-UE beam 152 used while UE device 10 gathered wireless performance metric data that exceeds a threshold value as the serving beam (e.g., a RIS-UE beam oriented towards UE device 10 at its new position/orientation). If no serving beam is found, processing may return to operation 196 via path 210 to perform a full sweep over all of the RIS-UE beams 152. If a serving beam is found, processing may proceed from operation 208 to operation 216 via path 212.

At operation 216, UE device 10 may enter a UE tracking mode (e.g., may perform UE tracking) to maintain its beam coverage with RIS 96. UE device 10 may perform wireless communications with AP 6 via RIS 96 over the serving beam(s) (e.g., by conveying THF signals that are reflected between AP 6 and UE device 10 by RIS 96 while configured to form a RIS-UE serving beam). UE device 10 may continue to gather sensor data such as wireless performance metric data (e.g., from received THF signals and/or reference signals) and/or other sensor data and may update the set of tracking beams as needed (e.g., as UE device 10 moves or rotates over time, when wireless link quality deteriorates, and/or periodically). In other words, UE device 10 may perform operations 176-182 of FIG. 13 while processing operation 216 of FIG. 14. Processing may loop back to operation 206 via path 218 and UE device 10 may instruct RIS 96 to sweep over RIS-UE beams in the updated set of tracking beams (e.g., while also sweeping over UE beams in the updated set of tracking beams), allowing RIS 96 to track UE device 10 as UE device 10 moves or rotates, as wireless link quality deteriorates, and/or periodically. If UE device 10 is unable to populate a set of tracking beams or if the sweep over the set of tracking beams fails, a full sweep over all the RIS-UE beams 152 may be performed (e.g., at operation 196). In this way, UE device 10 may actively control the system to perform signal beam sweeps to track its location based on sensor data gathered at the UE device in a way that minimizes latency by omitting full sweeps over all RIS-UE beams 152 when possible.

The example of FIG. 14 is merely illustrative. In general, UE device 10 may perform the operations of FIG. 14 and/or other operations in any desired order to control RIS 96 to track UE device 10 without having to perform full sweeps over RIS-UE beams unless necessary. For example, in a first beam sweep in which no tracking is performed, the beams for search may be restricted instead of performing a full search (e.g., restricted to a subset of RIS-UE beams selected based on the RIS-UE beams that are expected to be near or overlapping UE device 10 based on sensor data gathered by the UE device). If the beams are unable to be restricted (e.g., because UE device 10 has insufficient sensor data or no previous history of being in the vicinity of RIS 96), the first search may involve a full sweep over all of the RIS-UE beams (e.g., at operation 196). If any of the sweeps detects valid serving beams (e.g., beams along a sweep for which satisfactory wireless performance metric data was gathered), processing may jump to operation 216 to continue to track UE device 10 as it moves/rotates. Operation 216 may involve generation of an updated tracking beam set that is then swept over while tracking UE device 10 (e.g., at operation 206 from path 218). If the sweep over the updated tracking beam set yields satisfactory serving beams, RIS 96 and/or UE device 10 may be configured to use those serving beams and processing may again jump to operation 216. However, if the sweep over the updated tracking beam set does not yield a satisfactory beam, processing may revert to operation 196 to perform a full sweep. Sweeps over AP beams 150 and/or RIS-AP beams may also be performed as needed (e.g., periodically, in response to movement of AP 6 and/or RIS 96, when full beam sweeps over RIS-UE beams and UE beams are unable to recover the wireless link between AP 6 and UE device 10, when LOS path 92 between AP 6 and UE device 10 is recovered, etc.).

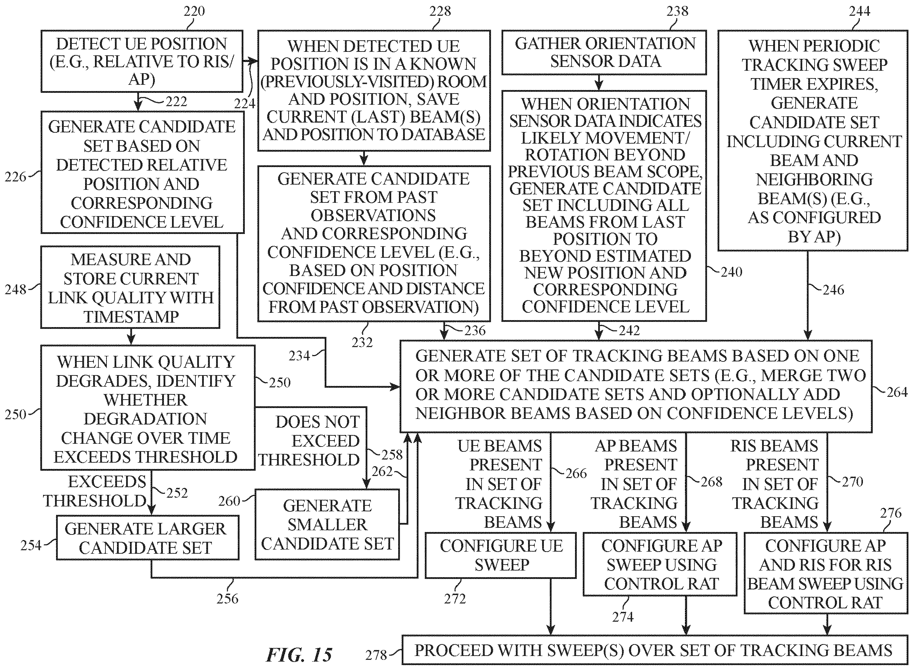

FIG. 15 is a flow chart of illustrative operations that may be performed by UE device 10 to generate the set of tracking beams used to maintain coverage of UE device 10 by RIS 96 as UE device 10 moves/rotates. The operations of FIG. 15 may, for example, be performed while processing operations 190 and/or 216 of FIG. 14.

Operations 220, 238, 244, and/or 248 of FIG. 15 may be performed concurrently. At operation 220, control circuitry 14 may detect (e.g., identify, determine, compute, etc.) the position of UE device 10 relative to RIS 96 from the sensor data gathered by the one or more sensors on UE device 10 (e.g., at operation 176 of FIG. 13). For example, control circuitry 14 may detect the position/orientation using a lidar sensor (e.g., where the lidar sensor uses transmitted and reflected light signals to detect the position of RIS 96 relative to UE device 10), UWB signals (e.g., where UWB antennas on RIS 96 transmit UWB signals that are received at UE device 10), a camera (e.g., where the camera captures images of environment 90 and uses an object recognition algorithm to identify the presence and position of RIS 96 within the field of view of the camera), etc. If desired, RIS 96 may include one or more visual indicators that allow a camera on UE device 10 to detect its location relative to UE device 10 based on images captured of environment 90 (e.g., using an object detection algorithm). Processing may then proceed to operation 226 via path 222.

At operation 226, control circuitry 14 may generate (e.g., identify, compute, calculate, produce, output, etc.) a candidate set of signal beams for inclusion in the set of tracking beams. Control circuitry 14 may generate the candidate set of signal beams based on the detected position of UE device 10 relative to RIS 96. The candidate set of signal beams may include one or more RIS-UE beams 152 and/or one or more UE beams 154. As an example, given that UE device 10 has knowledge of the RIS-UE beams 152 formable by RIS 96 (e.g., from processing operation 170 of FIG. 13), control circuitry 14 may generate the candidate set to include RIS-UE beams 152 having beam pointing directions that overlap or that are at or near the sensed location of UE device 10 relative to RIS 96. Similarly, the candidate set may include UE beams 154 having beam pointing directions that overlap or that are at or near the sensed location of RIS 96 relative to UE device 10.

If desired, control circuitry 14 may generate and assign a confidence level to one or more of the signal beams in the candidate set. The confidence level(s) may be based on the level of confidence control circuitry 14 has in its detected position relative to RIS 96. For example, if UE device 10 measured its position with a high degree of precision/accuracy and highly reliable sensor data, the beam(s) in the candidate set may be assigned a higher confidence level than if UE device 10 measured its position with a low degree of precision/accuracy or unreliable sensor data. If control circuitry 14 is unable to detect its position relative to RIS 96, the candidate set may be empty at operation 226. Processing may then proceed to operation 264 via path 234.

Processing may concurrently proceed from operation 220 to operation 228 via path 224. At operation 228, control circuitry 14 may compare its detected position to locations that are known to or that have been previously visited by UE device 10 (e.g., control circuitry 14 may compare the detected position to a position history of UE device 10). If control circuitry 14 detects that UE device 10 has been at or near the detected position before (e.g., within the same room as RIS 96), control circuitry 14 may save the current (last) signal beam to the corresponding current (last) position in the same room in memory, along with a corresponding confidence level. In this way, control circuitry 14 may continue to generate and populate a stored map of RIS-UE beams 152 and UE beams 154 that serve different locations within the room of RIS 96 (along with corresponding confidence levels for each location).

At operation 232, control circuitry 14 may check its memory (e.g., one or more databases) from previous visits to the same room/location for a RIS-UE beam 152 and/or UE beam 154 that has already been detected and stored for that location or for a position at or near that location. If a RIS-UE beam and/or UE beam is found, the beam(s) may be added to a candidate set of signal beams for inclusion in the set of tracking beams. If no such beams are found, the candidate set may be empty at operation 232. Control circuitry 14 may also assign a confidence level to each beam in the candidate set. The confidence level may be based on the confidence with which the position of UE device 10 was detected when the signal beam was stored for that location (e.g., the past position confidence) and/or based on the distance of UE device 10 from the location for which the signal beam was stored (e.g., the distance to the past observation). As an example, a higher confidence level may be assigned if UE device 10 is at the exact location of the previous measurement (e.g., at the exact location at which the stored RIS-UE beam and/or UE beam was identified) than if UE device 10 is separated by a non-zero distance from the location at which the stored RIS-UE beam and/or UE beam was identified. Processing may then proceed to operation 264 via path 236.

At operation 238, an orientation sensor (e.g., an accelerometer, gyroscope, compass, etc.) on UE device 10 may gather orientation sensor data (e.g., accelerometer data, gyroscope data, compass data, etc.). The orientation sensor data may be indicative of an orientation and/or movement of UE device 10.

At operation 240, control circuitry 14 may identify (e.g., compute, determine, calculate, generate, etc.) a change in the orientation sensor data over time since the last beam tracking sweep/search. If the orientation sensor data indicates that UE device 10 has moved and/or rotated to a new estimated position/orientation that is beyond the beam footprint (scope) of the previous RIS-UE beam, control circuitry 14 may generate a candidate set of signal beams for inclusion in the set of tracking beams. The candidate set of signal beams may include one or more (e.g., all) signal beams from the last position/orientation to at or beyond the new estimated position/orientation of UE device 10 indicated by the orientation sensor data. Control circuitry 14 may also assign a confidence level to each beam in the candidate set. The confidence level may be based on the confidence with which the orientation of UE device 10 was detected and/or based on the magnitude of the distance/rotation of UE device 10 from its previous location/orientation. As an example, a higher confidence level may be assigned if UE device 10 has rotated or moved by a smaller amount than if UE device 10 has rotated or moved by a larger amount. If the orientation sensor indicates that UE device 10 has not rotated or moved beyond the footprint of the previous RIS-UE beam, the candidate set may be empty at operation 240. Processing may then proceed to operation 264 via path 242.

At operation 244, control circuitry 14 may monitor a periodic beam tracking timer (e.g., the periodic beam tracking timer monitored at operation 172 of FIG. 13, which may be configured by AP 6 via the control RAT). When the periodic beam tracking timer expires, control circuitry 14 may generate a candidate set of signal beams for inclusion in the set of tracking beams. The set of candidate signal beams may include the current (previous) signal beam and one or more neighboring signal beams (e.g., the current RIS-UE beam 152 and one or more neighboring RIS-UE beams 152 as identified by the codebook for RIS 96 and/or the current UE beam 154 and one or more neighboring UE beams 154 as identified by the codebook for UE device 10). The periodic beam tracking timer may allow AP 6 to configure UE device 10 to periodically update the signal beam in case the sensor data on UE device 10 does not trigger a beam sweep and/or to ensure that the active signal beams remain fresh. Processing may then proceed to operation 264 via path 246.

At operation 248, UE device 10 may measure and store wireless performance metric data from received THF signals within the current serving signal beam(s). The wireless performance metric data may be indicative of the current link quality. UE device 10 may store corresponding time stamps with the wireless performance metric data.

At operation 250, control circuitry 14 on UE device 10 may compare the wireless performance metric data (e.g., the current link quality) to previous wireless performance metric data (e.g., earliergathered wireless performance metric data with an earlier timestamp) to determine whether the wireless performance metric data or the wireless link quality has degraded or deteriorated. If the wireless link quality has not degraded (deteriorated), processing may proceed to operation 260 via path 258. If the wireless link quality has degraded (deteriorated), control circuitry 14 may compare the change (e.g., degradation or deterioration) in wireless link quality (wireless performance metric data) to a threshold value. If the degradation in wireless link quality does not exceed the threshold value, processing may also proceed to operation 260 via path 258. If the degradation in wireless link quality exceeds the threshold value, processing may proceed to operation 254 via path 252.

At operation 254, control circuitry 14 may generate a candidate set of signal beams for inclusion in the set of tracking beams. The candidate set may include one or more beams around the current serving beam (e.g., the beam used to measure wireless link quality at operation 248). The candidate set may include a relatively large number of beams when the wireless link quality degraded excessively fast or by a relatively large amount.

At operation 260, control circuitry 14 may generate a smaller candidate set of signal beams than at operation 254. The candidate set may therefore include a relatively small number of beams when the wireless link quality degraded slowly or by a relatively small amount. Processing may proceed from operation 260 to operation 264 via path 262 and may proceed from operation 254 to operation 264 via path 256.

Any desired combination of the candidate sets produced at operations 220-260 may be used to generate the set of tracking beams. Operations 220-222, 228-232, 238-240, 244, and/or 248-260 may be omitted. At operation 264, control circuitry 14 may generate the set of tracking beams based one or more of the candidate sets generated at operations 226, 232, 240, 244, 254, and 260. For example, control circuitry 14 may generate the set of tracking beams by combining (merging) the signal beams from one or more of the candidate sets into a larger set of tracking beams. If desired, control circuitry 14 may merge candidate sets based on the confidence levels generated for each signal beam in the candidate sets. Signal beams having relatively low confidence levels (e.g., confidence levels below a threshold value) may be omitted for example.

If desired, control circuitry 14 may add one or more additional signal beams (e.g., RIS-UE beams 152 and/or UE beams 154) to the set of tracking beams that are not included in any of the candidate sets. The additional signal beams may include neighboring beams that are adjacent to one or more of the signal beams in one or more of the candidate sets of signal beams. If desired, more additional signal beam(s) adjacent to signal beams in the candidate set(s) may be added when the confidence level of the signal beams in the candidate set(s) are relatively low than when the confidence level is high. This may allow the set of tracking beams to include a more thorough beam search/sweep when confidence levels are low than when confidence levels are high.

The candidate sets and thus the set of tracking beams may include RIS-UE beams 152 and/or UE beams 154. When UE beams 154 are included in the set of tracking beams, processing may proceed to operation 272 via path 266.

At operation 272, control circuitry 14 may configure (program) phased antenna array 88 to sweep over the UE beams in the set of tracking beams. When RIS-UE beams 152 are included in the set of tracking beams, processing may proceed from operation 264 to operation 274 via path 268.

At operation 274, UE device 10 may use the control RAT to configure, control, or program RIS 96 to sweep over the RIS-UE beams 152 in the set of tracking beams. If desired, the set of tracking beams may include AP beams 150 and/or RIS-AP beams. These beams may be included to allow for the possibility that LOS path 92 between UE device 10 and AP 6 has been recovered. When AP beams 150 or RIS-AP beams are included in the set of tracking beams, processing may proceed from operation 264 to operation 276 via path 270.

At operation 276, UE device 10 may use the control RAT to configure, control, or program AP 6 to sweep over the AP beams 150 and/or to program RIS 96 to sweep over the RIS-AP beams in the set of tracking beams. Processing may proceed from operations 272-276 to operation 278.

At operation 278, RIS 96, UE device 10, and/or AP 6 may sweep over the set of tracking beams while UE device 10 measures and gathers wireless performance metric data from reference signals transmitted by AP 6 until one or more serving beams are found (e.g., at operations 208 or 198 of FIG. 14 or operation 182 of FIG. 13). In this way, UE device 10 may actively monitor its own wireless conditions in communicating using the data transfer RAT and may intelligently control (e.g., based on sensor data gathered at UE device 10) its own phased antenna array 88 in addition to RIS 96 and/or AP 6 to perform beam sweeps over a set of tracking beams having fewer total beams to search than when a full beam sweep is performed. This may serve to minimize latency and disruption in THF communications even as UE device 10 moves through environment 90.

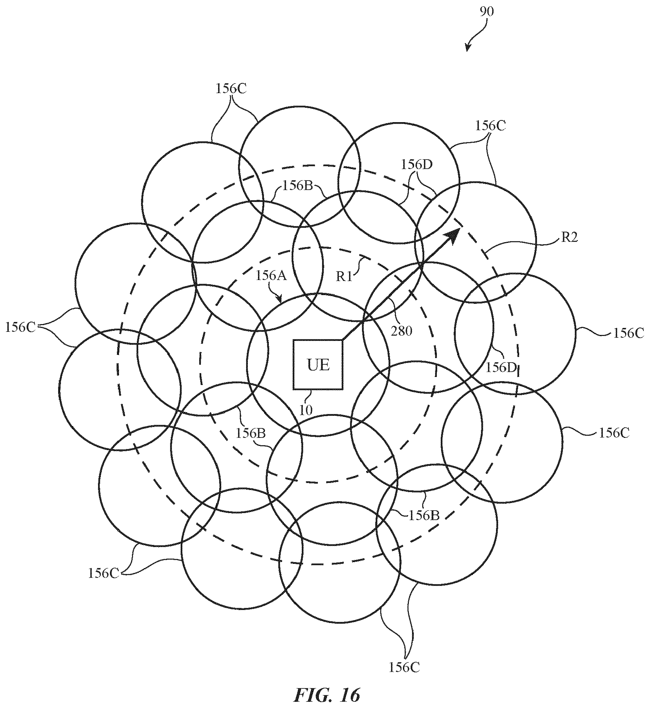

FIG. 16 is a diagram illustrating potential sets of tracking beams (sometimes referred to herein as tracking beam sets) that UE device 10 may instruct RIS 96 to search over to maintain THF communications between UE device 10 and AP 6 (e.g., while processing the operations of FIGS. 13-15). As shown in FIG. 16, RIS 96 may be steerable over a number of beam footprints 156 each corresponding to a respective RIS-UE beam 152 (FIG. 12). UE device 10 may be located within a given beam footprint 156A.

When the amount of uncertainty in the relative position of UE device 10 within environment 90 is relatively low (e.g., when the confidence level of the sensor data gathered by UE device 10 is relatively high, when the degradation in wireless link quality is relatively slow, and/or when the time between beam sweeps is relatively short), control circuitry 14 may select (include) the RIS-UE beams 152 for the set of tracking beams that produce beam footprints 156B at or within a first radius R1 from UE device 10 (e.g., using the known codebook of RIS 96). When the amount of uncertainty in the relative position of UE device 10 within environment 90 is relatively high (e.g., when the confidence level of the sensor data gathered by UE device 10 is relatively low, when the degradation in wireless link quality is excessively fast, or when the time between beam sweeps is relatively long), control circuitry 14 may select (include) the RIS-UE beams 152 for the set of tracking beams that produce beam footprints 156B and 156C at or within a second radius R2 from UE device 10 that is greater than first radius R1. In other words, UE device 10 may control RIS 96 to sweep over a greater number of RIS-UE beams when it has excessive uncertainty in its relative position or when the wireless link quality has not degraded or degraded slowly than when it has relatively low uncertainty in its relative position or when the wireless link quality has degraded rapidly.

As another example, when UE device 10 detects that it is moving/rotating in the direction of movement vector 280 (e.g., while processing operation 240 of FIG. 15), UE device 10 may select (include) the RIS-UE beams 152 for the set of tracking beams that produce beam footprints 156D overlapping the expected position/orientation of UE device 10 as indicated by the gathered sensor data (e.g., beams overlapping movement vector 280). The number of RIS-UE beams included in the set of tracking beams overlapping the expected position/orientation (e.g., movement vector 280) may be greater when the confidence level of the sensor data is relatively high than when the confidence level of the sensor data is relatively low, when the time between beam sweeps is relatively long rather than relatively low, and/or when UE device 10 is moving/rotated relatively quickly than when UE device 10 is moving/rotating relatively slowly. This may serve to maximize the chance that serving beam(s) will be found while also minimizing the overall time required to find the serving beam(s) relative to when a full beam sweep is performed.

UE device 10 may identify the set of tracking beams and may control AP 6 and/or RIS 96 to sweep over the set of tracking beams autonomously, either using reference signals (e.g., CSI-RS or demodulation reference signals transmitted using the data transfer RAT) transmitted by AP 6 or other downlink signals dedicated for beam tracking. The beam tracking sweeps may be mostly user-specific. In contrast with traditional cellular beam sweeps, RIS-beamformed reference signals are only receivable within a relatively small tracking area. Other users cannot receive in the same neighborhood, so each user needs a dedicated tracking sweep. To avoid overhead (e.g., tracking sweep reference signal durations not available for payload data transmission), multi-user tracking may be performed when RIS 96 is able to simultaneously form RIS-UE beams in multiple directions (e.g., where the energy from one reference signal transmitted by AP 6 is split between different directions by RIS 96). If desired, users spaced closely together may receive a common tracking sweep (e.g., if AP 6 combines tracking sets of multiple users into a single tracking set).

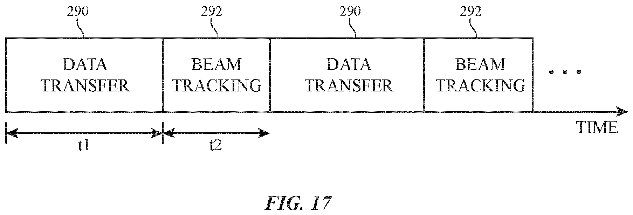

If desired, AP 6 and UE device 10 may perform data transfer and beam sweeping/tracking in a time-multiplexed manner. FIG. 17 is a timing diagram showing how AP 6 and UE device 10 may perform data transfer and beam sweeping/tracking in a time-multiplexed manner. As shown in FIG. 17, UE device 10 and AP 6 may use the data transfer RAT to perform data transfer during blocks 290. AP 6 may transmit data during data transfer blocks 290 and may transmit reference signals during beam tracking blocks 292. Beam tracking/sweeping may be performed during beam tracking blocks 292. Beam tracking blocks 292 may be time-interleaved (duplexed) between data transfer blocks 290. Data transfer blocks 290 may have duration t1. Beam tracking blocks 292 may have duration t2. The periodicity of beam tracking (e.g., the beam sweep timer processed at operation 172 of FIG. 13) may be determined by durations t1 and t2. If desired, AP 6 may configure/set durations t1 and t2 and thus the periodicity of beam tracking.

UE device 10 may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users. The optical components described herein (e.g., MZM modulator(s), waveguide(s), phase shifter(s), UTC PD(s), etc.) may be implemented in plasmonics technology if desired.

The methods and operations described above in connection with FIGS. 1-15 may be performed by the components of UE device 10, RIS 96, and/or AP 6 using software, firmware, and/or hardware (e.g., dedicated circuitry or hardware). Software code for performing these operations may be stored on non-transitory computer readable storage media (e.g., tangible computer readable storage media) stored on one or more of the components of UE device 10, RIS 96, and/or AP 6. The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of UE device 10, RIS 96, and/or AP 6. The processing circuitry may include microprocessors, central processing units (CPUs), application-specific integrated circuits with processing circuitry, or other processing circuitry.

In accordance with an aspect of the invention, there is provided a method of operating a user equipment (UE) device to communicate with a wireless access point via a reconfigurable intelligent surface (RIS), the RIS having a first array of antenna elements, the RIS having a set of signal beams formable by the first array of antenna elements, the UE device including a second array of antenna elements, and the method includes generating sensor data at a sensor, transmitting, using a transmitter, an instruction to the RIS that configures the RIS to sweep the first array of antenna elements over a tracking beam set that is selected based on the sensor data, the tracking beam set including a subset of the signal beams in the set of signal beams formable by the first array of antenna elements, receiving, using the second array of antenna elements, radio-frequency signals that have reflected off the RIS while the RIS sweeps the first array of antenna elements over the tracking beam set and generating, at one or more processors, wireless performance metric data based on the radio-frequency signals received by the second array of antenna elements.

Preferably, the method includes controlling, with the transmitter, the RIS to program the first array of antenna elements to form a serving beam, the serving beam being selected from the set of signal beams based on the wireless performance metric data and conveying, using the second array of elements, wireless data with the wireless access point via reflection off the RIS while the first array of antenna elements is programmed to form the serving beam.

Preferably, receiving the radio-frequency signals includes receiving the radio-frequency signals according to a first radio access technology (RAT) associated with wireless communications at frequencies greater than or equal to 100 GHz.

Preferably, transmitting the instruction includes transmitting a control signal to the RIS using the transmitter and a second RAT that is different from the first RAT.

Preferably, the radio-frequency signals include reference signals transmitted by the wireless access point using the first RAT.

Preferably, the sensor includes a motion sensor and generating the sensor data includes using the motion sensor to generate motion sensor data.

Preferably, the tracking beam set includes a first number of signal beams from the set of signal beams when the motion sensor data exceeds a threshold value and includes a second number of signal beams from the set of signal beams when the motion sensor data is less than the threshold value, the second number of signal beams being less than the first number of signal beams.

Preferably, the sensor includes a position sensor, the sensor data includes position sensor data gathered by the position sensor, and the tracking beam set includes one or more signal beams from the set of signal beams at or near a position of the UE device identified by position sensor data.

Preferably, the tracking beam set is selected based on a current location of the UE device identified by the sensor data and based on a prior signal beam from the set of signal beams that was used by the RIS while the UE device was previously at the current location.

Preferably, generating the sensor data includes assigning a confidence level to the sensor data, the tracking beam set including a first number of signal beams from the set of signal beams when the sensor data is assigned a first confidence level, and the tracking beam set including a second number of signal beams from the set of signal beams that is greater than the first number of signal beams when the sensor data is assigned a second confidence level that is less than the first confidence level.

In accordance with an aspect of the invention, there is provided a user equipment (UE) device configured to communicate with a wireless access point via a reconfigurable intelligent surface (RIS) having a set of signal beams formable by antenna elements on the RIS, the UE device includes an antenna array configured to receive radio-frequency signals transmitted by the wireless access point and reflected off the RIS, a sensor configured to generate sensor data and a transmitter configured to control the RIS to sweep over a set of tracking beams while reflecting the radio-frequency signals transmitted by the wireless access point, the set of tracking beams including one or more of the signal beams from the set of signal beams selected based on the sensor data.

Preferably, the sensor includes a radio-frequency sensor configured to generate wireless performance metric data based on the radio-frequency signals received by the antenna array.

Preferably, the set of tracking beams includes a first number of signal beams from the set of signal beams when a deterioration in wireless link quality over time identified by the wireless performance metric data exceeds a threshold value and includes a second number of signal beams from the set of signal beams when the deterioration in wireless link quality over time identified by the wireless performance metric data is less than the threshold value, the first number of signal beams being greater than the second number of signal beams.

Preferably, the set of tracking beams is selected in response to the wireless performance metric data falling below a threshold value.

Preferably, the sensor includes a camera and the sensor data includes an image of the RIS captured by the camera.

Preferably, the sensor includes a light detection and ranging (lidar) sensor and the sensor data includes lidar sensor data captured by the lidar sensor.

Preferably, the sensor includes an ultrawideband antenna and the sensor data includes ultrawideband signals transmitted by the RIS and received by the ultrawideband antenna.

Preferably, the set of tracking beams is selected in response to an expiration of a periodic timer, the set of tracking beams including a current signal beam from the set of signal beams and at least one additional signal beam from the set of signal beams adjacent to the current signal beam.

In accordance with an aspect of the invention, there is provided a method of operating a first electronic device to communicate with a second electronic device via a reconfigurable intelligent surface (RIS), the RIS having an array of antenna elements, the array of antenna elements being programmable to form a set of signal beams, and the method includes detecting, using a sensor, movement of the first electronic device, instructing, using a transmitter, the RIS to sweep over a subset of the set of signal beams while the first electronic device measures radio-frequency signals transmitted by the wireless access point, the subset of the set of signal beams being selected based on the detected movement of the first electronic device and controlling, using the transmitter, the RIS to use a serving beam to reflect wireless data conveyed between the first electronic device and the second electronic device, the serving beam being selected from the set of signal beams based on the measured radio-frequency signals.

Preferably, the method includes controlling, using the transmitter when no serving beam is identified based on the measured radio-frequency signals, the RIS to sweep over all of the signal beams in the set of signal beams while the UE device measures the radio-frequency signals transmitted by the wireless access point.

The foregoing is merely illustrative and various modifications can be made to the described embodiments. The foregoing embodiments may be implemented individually or in any combination.

## Claims

1. A method of operating a user equipment (UE) device to communicate with a wireless access point via a reconfigurable intelligent surface (RIS), the RIS having a first array of antenna elements, the RIS having a set of signal beams formable by the first array of antenna elements, the UE device including a second array of antenna elements, and the method comprising:
generating sensor data at a sensor;
transmitting, using a transmitter, an instruction to the RIS that configures the RIS to sweep the first array of antenna elements over a tracking beam set that is selected based on the sensor data, the tracking beam set including a subset of the signal beams in the set of signal beams formable by the first array of antenna elements;
receiving, using the second array of antenna elements, radio-frequency signals that have reflected off the RIS while the RIS sweeps the first array of antenna elements over the tracking beam set; and
generating, at one or more processors, wireless performance metric data based on the radio-frequency signals received by the second array of antenna elements.

2. The method of claim 1, further comprising:
controlling, with the transmitter, the RIS to program the first array of antenna elements to form a serving beam, the serving beam being selected from the set of signal beams based on the wireless performance metric data; and
conveying, using the second array of elements, wireless data with the wireless access point via reflection off the RIS while the first array of antenna elements is programmed to form the serving beam.

3. The method of claim 1 or claim 2, wherein receiving the radio-frequency signals comprises receiving the radio-frequency signals according to a first radio access technology (RAT) associated with wireless communications at frequencies greater than or equal to 100 GHz.

4. The method of claim 3, wherein transmitting the instruction comprises:
transmitting a control signal to the RIS using the transmitter and a second RAT that is different from the first RAT.

5. The method of claim 3 or claim 4, wherein the radio-frequency signals comprise reference signals transmitted by the wireless access point using the first RAT.

6. The method of any preceding claim, wherein the sensor comprises a motion sensor and generating the sensor data comprises using the motion sensor to generate motion sensor data, wherein the tracking beam set includes a first number of signal beams from the set of signal beams when the motion sensor data exceeds a threshold value and includes a second number of signal beams from the set of signal beams when the motion sensor data is less than the threshold value, the second number of signal beams being less than the first number of signal beams.

7. The method of any preceding claim, wherein the sensor comprises a position sensor, the sensor data comprises position sensor data gathered by the position sensor, and the tracking beam set includes one or more signal beams from the set of signal beams at or near a position of the UE device identified by position sensor data.

8. The method of any preceding claim, wherein the tracking beam set is selected based on a current location of the UE device identified by the sensor data and based on a prior signal beam from the set of signal beams that was used by the RIS while the UE device was previously at the current location.

9. The method of any of claims 1 to 5, wherein generating the sensor data comprises assigning a confidence level to the sensor data, the tracking beam set including a first number of signal beams from the set of signal beams when the sensor data is assigned a first confidence level, and the tracking beam set including a second number of signal beams from the set of signal beams that is greater than the first number of signal beams when the sensor data is assigned a second confidence level that is less than the first confidence level.

10. A user equipment (UE) device configured to communicate with a wireless access point via a reconfigurable intelligent surface (RIS) having a set of signal beams formable by antenna elements on the RIS, the UE device comprising:
an antenna array configured to receive radio-frequency signals transmitted by the wireless access point and reflected off the RIS;
a sensor configured to generate sensor data; and
a transmitter configured to control the RIS to sweep over a set of tracking beams while reflecting the radio-frequency signals transmitted by the wireless access point, the set of tracking beams including one or more of the signal beams from the set of signal beams selected based on the sensor data.

11. The UE device of claim 10, wherein the sensor comprises a radio-frequency sensor configured to generate wireless performance metric data based on the radio-frequency signals received by the antenna array.

12. The UE device of claim 10 or claim 11, wherein the set of tracking beams includes a first number of signal beams from the set of signal beams when a deterioration in wireless link quality over time identified by the wireless performance metric data exceeds a threshold value and includes a second number of signal beams from the set of signal beams when the deterioration in wireless link quality over time identified by the wireless performance metric data is less than the threshold value, the first number of signal beams being greater than the second number of signal beams.

13. The UE device of any of claims 10 to 12, wherein the sensor comprises a camera and the sensor data comprises an image of the RIS captured by the camera.

14. The UE device of any of claims 10 to 13, wherein the sensor comprises a light detection and ranging (lidar) sensor and the sensor data comprises lidar sensor data captured by the lidar sensor.

15. The UE device of any of claims 10 to 14, wherein the sensor comprises an ultrawideband antenna and the sensor data comprises ultrawideband signals transmitted by the RIS and received by the ultrawideband antenna.
